# EUROPEAN PATENT APPLICATION

(11) **EP 4 742 763 A1**
(43) Date of publication of application: **13.05.2026**
(21) Application number: 24848200.2
(22) Date of filing: 27.07.2024
(51) Int. Cl.: H04W 48/16, H04W 36/14

(54) **COMMUNICATION METHOD AND RELATED DEVICE**

(30) Priority: 31.07.2023 CN 202310963466
(71) Applicant: Honor Device Co., Ltd., Shenzhen, Guangdong 518040 (CN)
(72) Inventor: LI, Haibo, Shenzhen, Guangdong 518040 (CN); XUE, Chao, Shenzhen, Guangdong 518040 (CN)
(74) Representative: Gill Jennings & Every LLP
(86) International application number: PCT/CN2024/108014
(87) International publication number: WO 2025/026245

(57) **Abstract**

This application discloses a communication method and a related device. According to the method, the terminal device may store, after fallback succeeds, related information such as an LTE frequency point indicated by a network side for redirection for the fallback, a frequency point corresponding to an NR cell camped on before fallback, and a frequency point and a cell ID that are of an LTE cell camped on after fallback; and the terminal device may measure, before fallback, an LTE frequency point corresponding to an LTE neighboring cell of a currently camped NR cell and store related information of the LTE frequency point. The terminal device may search for an appropriate LTE cell based on the stored related information of a previous successful fallback process and/or the measured LTE frequency point. If the terminal device finds an appropriate LTE cell, the terminal device accesses the LTE cell. Otherwise, the terminal device attempts to perform searching on another LTE frequency point in another manner. According to the method, it is easier for the terminal device to quickly find an LTE cell with a good signal and access the LTE cell.

## Description

This application claims priority to Chinese Patent Application No. 202310963466.0, filed with the China National Intellectual Property Administration on July 31, 2023 and entitled "COMMUNICATION METHOD AND RELATED DEVICE", which is incorporated herein by reference in its entirety.

### TECHNICAL FIELD

This application relates to the field of communication technologies, and in particular, to a communication method and a related device.

### BACKGROUND

In a mobile communication system, to ensure continuity of a service (for example, a voice service) performed by a terminal device, when a currently registered network cannot provide the corresponding service (for example, the voice service), the corresponding service needs to be provided by falling back to another appropriate network. For example, when the terminal device or a network side cannot use VoNR (for example, the terminal device/the network side does not support VoNR, or the terminal device does not turn on a VoNR switch) or a signal of an NR cell is poor (that is, 5G network signal coverage is weak, for example, a signal of an NR cell on which the terminal device camps and a signal of an NR neighboring cell of the NR cell are weak), the terminal device may fall back from a 5G (5th Generation) network to a 4G (4th Generation) network. In other words, when NR (New Radio, new radio) cannot carry a corresponding service, the corresponding service is handed over to LTE (Long Term Evolution, long term evolution) through fallback. The foregoing fallback procedure used when the terminal device or the network side cannot use VoNR includes a relatively typical voice fallback procedure, which is referred to as evolved packet system (Evolved Packet System, EPS) voice fallback (Fallback), that is, EPS fallback, and may also be referred to as EPS FB for short. EPS fallback means that when a 5G network does not have a VoNR condition, a voice service falls back from the 5G network to a 4G network, and continuity of the voice service is ensured over VoLTE. In other words, when the terminal device or the network side does not support VoNR or does not turn on the VoNR switch, the terminal device operating in a standalone (Standalone, SA) mode needs to perform EPS fallback, that is, fall back to the 4G network to perform the voice service.

One of the most common manners of falling back from the 5G network to the 4G network is that the network side gives a frequency point through redirection, and the terminal device searches for an LTE cell corresponding to the frequency point. Once a signal of the LTE cell corresponding to the frequency point given by the network side is weak, the terminal device may not find an appropriate LTE cell in a long time, or may have difficulty in accessing after finding an appropriate LTE cell, leading to problems such as long access time and poor experience after access. Generally, both the terminal device and the network side are configured with timers related to fallback. Because time for searching for and accessing the LTE cell is long, the timer related to fallback may time out before a dedicated bearer is established. Once the timer times out, the corresponding service on the terminal device fails, that is, fallback fails.

It can be learned from the foregoing content that the current fallback process may have problems such as unsuccessful fallback or a high fallback delay.

### SUMMARY

Embodiments of this application provide a communication method and a related device, to optimize a fallback process of a terminal.

According to a first aspect, an embodiment of this application provides a communication method. The method may be applied to a terminal device. The method may include: The terminal device camps on a first cell, where the first cell is a new radio NR cell. The terminal device starts a first timer and a second timer in response to receiving a first message, where the first message carries an indication to redirect to a target long term evolution LTE frequency point; the target LTE frequency point is an LTE frequency point indicated by a network side for redirection; duration of the first timer is less than duration of the second timer; and interval duration between a start moment of the first timer and a start moment of the second timer is short. The terminal device searches, based on the target LTE frequency point, for an LTE cell meeting a first preset condition. If the LTE cell meeting the first preset condition is still not found until the first timer times out, the terminal device searches, based on a first LTE frequency point set, for an LTE cell meeting a second preset condition, where the first LTE frequency point set includes at least one LTE frequency point different from the target LTE frequency point. If the LTE cell meeting the second preset condition is found when the second timer does not time out, the terminal device camps on the found LTE cell meeting the second preset condition.

In the solution provided in this embodiment, the terminal device may start the first timer and the second timer when receiving a message that is sent by the network side and that carries the indication to redirect to the target LTE frequency point. In an aspect, the terminal device may control, by using the first timer, duration in which the terminal device searches, based on the target LTE frequency point, for the LTE cell meeting the first preset condition, to prevent the terminal device from continuously performing searching on the target LTE frequency point when network signal coverage of the target LTE frequency point is weak and it is difficult to find, on the target LTE frequency point, the LTE cell meeting the first preset condition. In another aspect, the terminal device may control the entire duration of fallback by using the second timer, to avoid a case in which a user cannot communicate for a long time due to excessively long fallback time. In still another aspect, when the terminal device does not find, based on the target LTE frequency point, the LTE cell meeting the first preset condition, the terminal device may search, based on another LTE frequency point, for the LTE cell meeting the second preset condition, to shorten duration in which an LTE cell meeting a corresponding preset condition is found and accessed.

In some embodiments of this application, the first cell may be an NR cell mentioned in step S1, step S101, step S201, and step S301.

In some embodiments of this application, the first message may be an RRC release message. The indication that is to redirect to the target LTE frequency point and that is carried in the first message may be understood as a redirection indication (as shown in step S2). The target LTE frequency point carried in the first message may be understood as an LTE frequency point indicated by the network side for redirection for this time of fallback.

In some embodiments of this application, the first timer may be a timer T1, and the second timer may be a timer T2.

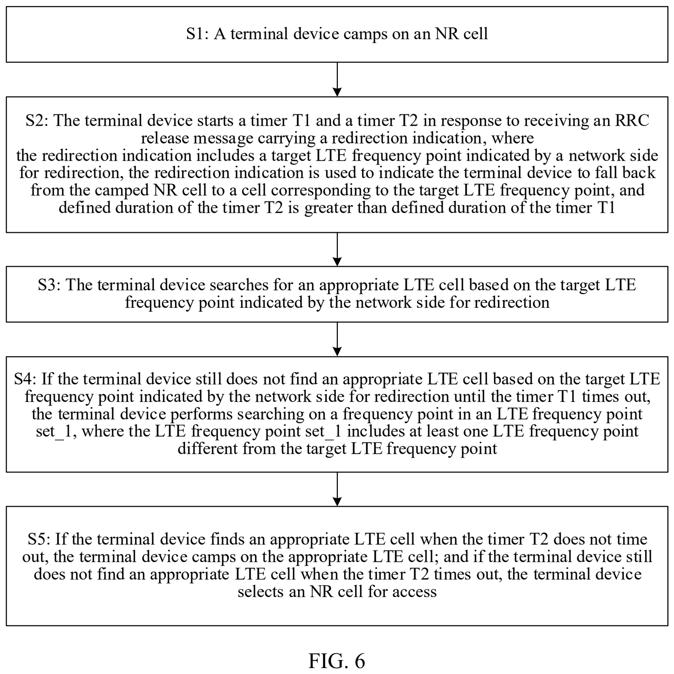

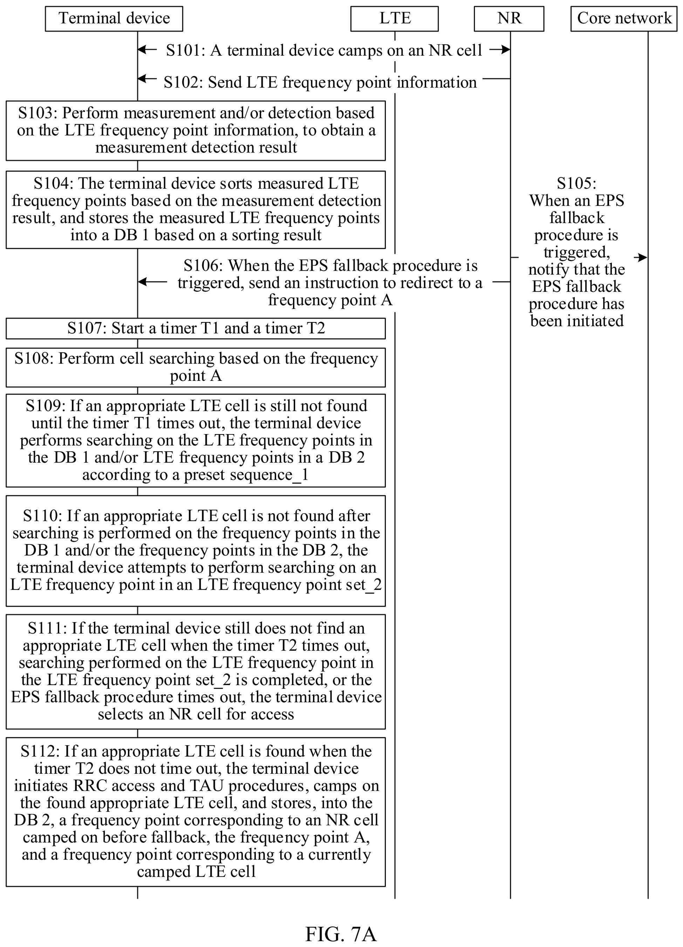

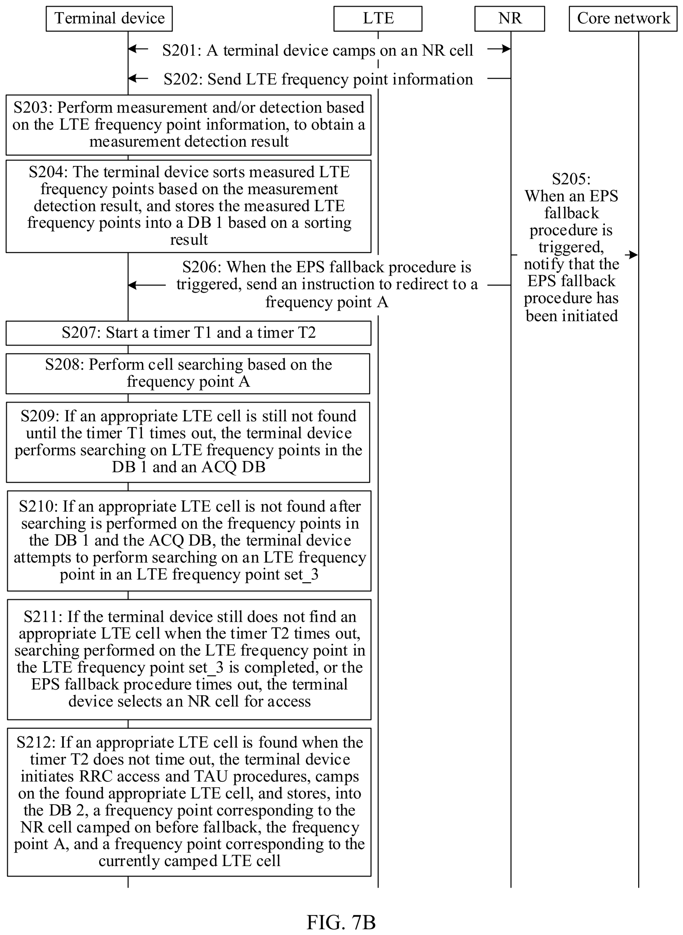

In some embodiments of this application, an LTE cell meeting a preset condition may be an appropriate LTE cell mentioned below. With reference to FIG. 6, FIG. 7A, and FIG. 7B, it may be understood that when the timer T1 does not time out, an appropriate LTE cell searched for by the terminal device may be the LTE cell meeting the first preset condition; and when the timer T1 times out but the timer T2 does not time out, an appropriate LTE cell searched for by the terminal device may be the LTE cell meeting the second preset condition.

In some embodiments of this application, the first LTE frequency point set may be an LTE frequency point set_1.

With reference to the first aspect, in a possible implementation, the first message may be a radio resource control release RRC release message. The method further includes: If the LTE cell meeting the second preset condition is still not found until the second timer times out, the terminal device selects a second cell to camp on, where the second cell is an NR cell.

In the solution provided in this application, the terminal device may control duration of an entire fallback process by using the second timer. If the terminal device still does not find an appropriate LTE cell (the LTE cell meeting the second preset condition) when the second timer times out, the terminal device may no longer search for an appropriate LTE cell, but selects an NR cell to camp on. In this manner, the case in which the user cannot communicate for a long time due to the excessively long fallback time can be avoided.

In some embodiments of this application, the second cell may be an NR cell mentioned in step S5, step S111, step S211, and step S312. It may be understood that the first cell and the second cell may be the same or may be different.

With reference to the first aspect, in a possible implementation, the first preset condition is the same as or different from the second preset condition.

In some embodiments of this application, regardless of whether searching is performed based on the target LTE frequency point delivered by the network side for redirection or another LTE frequency point, the terminal device may determine, by using a same access threshold, whether a found LTE cell is an appropriate LTE cell, to determine whether the LTE cell can be accessed.

In some embodiments of this application, compared with an access threshold used for determining, when searching is performed based on another LTE frequency point, whether a found LTE cell is an appropriate LTE cell, the terminal device may use, when searching is performed based on the target LTE frequency point delivered by the network side for redirection, a higher access threshold to determine whether a found LTE cell is an appropriate LTE cell. In this manner, a problem of long subsequent access time caused by a weak signal of the appropriate LTE cell found when the terminal device performs searching based on the target LTE frequency point delivered by the network side for redirection can be avoided.

With reference to the first aspect, in a possible implementation, that the first preset condition is different from the second preset condition specifically includes: A preset access threshold corresponding to the second preset condition is less than a preset access threshold corresponding to the first preset condition, where the preset access threshold is a signal quality threshold at which access to an LTE cell is allowed.

It may be understood that, the preset access threshold may be an access threshold mentioned below. For related content of signal quality, refer to the following related descriptions. Details are not described herein.

With reference to the first aspect, in a possible implementation, the duration of the first timer is less than duration of a third timer started on the network side; and the third timer is used by the network side to control duration of fallback.

In the solution provided in this application, the defined duration of the first timer is less than defined duration of a timer started on the network side for controlling fallback, so that the terminal device controls duration of searching based on the target LTE frequency point indicated by the network side for redirection.

In some embodiments of this application, the third timer may be a fallback timer that is started on the network side and that is mentioned below.

With reference to the first aspect, in a possible implementation, the duration of the second timer is not less than the duration of the third timer started on the network side, and is not greater than x times the duration of the third timer; the third timer is used by the network side to control the duration of fallback; and x is not less than 1, and is not greater than 2.

In the solution provided in this application, the defined duration of the second timer may be greater than or equal to the defined duration of the timer started on the network side for controlling fallback, and is not greater than x times the defined duration of the timer started on the network side for controlling fallback, to control the duration of the entire fallback process, and reserve time for the terminal device to perform searching based on another LTE frequency point.

With reference to the first aspect, in a possible implementation, the duration of the third timer is 5 seconds.

With reference to the first aspect, in a possible implementation, the first LTE frequency point set includes first LTE frequency point information and a historical LTE frequency point; the first LTE frequency point information includes an LTE frequency point corresponding to an LTE neighboring cell of the first cell; the historical LTE frequency point includes an LTE frequency point corresponding to an LTE cell on which the terminal device has camped; and that the terminal device searches, based on a first LTE frequency point set, for an LTE cell meeting a second preset condition specifically includes: The terminal device determines whether LTE cells corresponding to the LTE frequency point in the first LTE frequency point information and the historical LTE frequency point meet the second preset condition.

In some embodiments of this application, the first LTE frequency point information may be a DB 1 mentioned below, and the historical LTE frequency point may be an ACQ DB mentioned below.

With reference to the first aspect, in a possible implementation, that the terminal device determines whether LTE cells corresponding to the LTE frequency point in the first LTE frequency point information and the historical LTE frequency point meet the second preset condition specifically includes: The terminal device selects a group of LTE frequency points from the LTE frequency point in the first LTE frequency point information and the historical LTE frequency point, and sequentially determines, in descending order of energy, whether LTE cells corresponding to the group of LTE frequency points meet the second preset condition. If all LTE cells corresponding to the group of LTE frequency points do not meet the second preset condition, the terminal device performs the step of selecting a group of LTE frequency points from the LTE frequency point in the first LTE frequency point information and the historical LTE frequency point, and sequentially determining, in descending order of energy, whether LTE cells corresponding to the group of LTE frequency points meet the second preset condition again, until all frequency points in the LTE frequency point in the first LTE frequency point information and the historical LTE frequency point are selected. LTE frequency points selected by the terminal device from the LTE frequency point in the first LTE frequency point information and the historical LTE frequency point again are different from the LTE frequency points previously selected by the terminal device from the LTE frequency point in the first LTE frequency point information and the historical LTE frequency point.

In the solution provided in this application, the terminal device may first select some LTE frequency points from the DB 1 and the ACQ DB, compare energy values of the LTE frequency points, and then sequentially search, in descending order of energy, the LTE frequency points for an appropriate LTE cell (that is, the LTE cell meeting the second preset condition described above). If no appropriate LTE cell is found, the terminal device may continue to select some LTE frequency points from the DB 1 and the ACQ DB again, and perform the foregoing steps for the LTE frequency points selected again. The method may enable the terminal device to first perform searching on LTE frequency points with higher energy, so that the terminal device can more easily find an appropriate LTE frequency point in a short time, that is, a probability of finding an appropriate LTE frequency point by the terminal device in a short time is improved.

In some embodiments of this application, the terminal device selects a group of LTE frequency points whose total quantity is a target quantity each time. In a possible implementation, a total quantity of the LTE frequency point in the first LTE frequency point information and the historical LTE frequency point is not an integer multiple of the target quantity. In this case, the terminal device selects, at the last time, a group of LTE frequency points whose quantity is less than the target quantity from the LTE frequency point in the first LTE frequency point information and the historical LTE frequency point.

In some embodiments of this application, the target quantity may be s1.

With reference to the first aspect, in a possible implementation, the first LTE frequency point set further includes second LTE frequency point information; and that the terminal device searches, based on a first LTE frequency point set, for an LTE cell meeting a second preset condition specifically includes: If all LTE cells corresponding to the LTE frequency point in the first LTE frequency point information and the historical LTE frequency point do not meet the second preset condition, the terminal device searches, based on the second LTE frequency point information, for the LTE cell meeting the second preset condition.

In some embodiments of this application, if the terminal device does not find an appropriate LTE cell based on both the first LTE frequency point information and the historical LTE frequency point, the terminal device may continue to perform searching based on another LTE frequency point in the first LTE frequency point set. In this manner, the terminal device may continue to attempt to search other frequency points, to find an appropriate LTE frequency point.

In some embodiments of this application, if the terminal device does not find an appropriate LTE cell based on both the first LTE frequency point information and the historical LTE frequency point, the terminal device may no longer search other LTE frequency points, that is, determine that fallback fails, and select an NR cell for access.

With reference to the first aspect, in a possible implementation, the second LTE frequency point information specifically includes at least one of the following: an LTE frequency point in a full frequency band, and an LTE frequency point in a prefer frequency band.

It may be understood that, the full frequency band refers to a full band, and the prefer frequency band refers to a prefer band.

In some embodiments of this application, the third LTE frequency point information may be an LTE frequency point set_3.

With reference to the first aspect, in a possible implementation, that the terminal device selects a group of LTE frequency points from the LTE frequency point in the first LTE frequency point information and the historical LTE frequency point specifically includes: The terminal device sorts the LTE frequency point in the first LTE frequency point information and the historical LTE frequency point based on one or more of signal strengths and bandwidths of the LTE cells corresponding to the LTE frequency point in the first LTE frequency point information and the historical LTE frequency point, whether the LTE cells are anchor cells, and whether the LTE cells are high-speed rail cells, and selects s1 top LTE frequency points as the group of LTE frequency points, where s1 is a positive integer.

In the solution provided in this application, the terminal device may select each group of LTE frequency points from the first LTE frequency point information and the historical LTE frequency point based on a sorting result of one or more of the signal strengths, the bandwidths, whether the LTE cells are anchor cells, and whether the LTE cells are high-speed rail cells, instead of randomly selecting each group of LTE frequency points. The method may enable the terminal device to preferentially select an LTE frequency point whose corresponding LTE cell has a better signal, so that the terminal device can more easily find an appropriate LTE cell in a short time.

With reference to the first aspect, in a possible implementation, the first LTE frequency point set includes first LTE frequency point information; the first LTE frequency point information includes an LTE frequency point corresponding to an LTE neighboring cell of the first cell; that the terminal device searches, based on a first LTE frequency point set, for an LTE cell meeting a second preset condition specifically includes: The terminal device determines whether an LTE cell corresponding to the LTE frequency point in the first LTE frequency point information meets the second preset condition.

In the solution provided in this application, the terminal device may first perform searching based on an LTE frequency point corresponding to an LTE neighboring cell of an NR cell on which the terminal device currently camps. In this way, the terminal device may perform searching based on related information of a frequency point of an LTE neighboring cell at a current location, to more easily find an appropriate LTE cell.

With reference to the first aspect, in a possible implementation, the first LTE frequency point set further includes third LTE frequency point information; and that the terminal device searches, based on a first LTE frequency point set, for an LTE cell meeting a second preset condition specifically further includes: If all LTE cells corresponding to the LTE frequency point in the first LTE frequency point information do not meet the second preset condition, the terminal device searches, based on the third LTE frequency point information, for the LTE cell meeting the second preset condition.

In the solution provided in this application, the terminal device may first search a DB 1, and then search other LTE frequency points such as an ACQ DB when no appropriate LTE cell is found. This manner can improve a probability of finding an appropriate LTE cell by the terminal device in a short time.

With reference to the first aspect, in a possible implementation, the third LTE frequency point information specifically includes at least one of the following: a historical LTE frequency point, an LTE frequency point in a full frequency band, and an LTE frequency point in a prefer frequency band.

With reference to the first aspect, in a possible implementation, the first LTE frequency point set includes first LTE frequency point information and historical fallback information; the first LTE frequency point information includes an LTE frequency point corresponding to an LTE neighboring cell of the first cell; the historical fallback information includes at least one historical fallback record; each historical fallback record includes the following information in a historical fallback process in which the terminal device successfully falls back from NR to LTE: an LTE frequency point indicated by the network side for redirection, a frequency point corresponding to an NR cell camped on by the terminal device before fallback, and a frequency point corresponding to an LTE cell camped on by the terminal device after fallback; and that the terminal device searches, based on a first LTE frequency point set, for an LTE cell meeting a second preset condition specifically includes: The terminal device determines whether an LTE cell corresponding to the LTE frequency point in the first LTE frequency point information meets the second preset condition, and determines whether the historical fallback information includes a first historical fallback record, where a frequency point that corresponds to an NR cell camped on by the terminal device before fallback and that is included in the first historical fallback record is a frequency point corresponding to the first cell; and an LTE frequency point that is indicated by the network side for redirection and that is included in the first historical fallback record is the target LTE frequency point. If the historical fallback information includes the first historical fallback record, the terminal device searches, based on a frequency point that corresponds to an LTE cell camped on by the terminal device after fallback and that is included in the first historical fallback record, for the LTE cell meeting the second preset condition.

In solutions provided in some embodiments of this application, the terminal device may first search for an appropriate LTE cell based on a DB 1 and a DB 2. The DB 1 includes related information of a frequency point of a current LTE neighboring cell of the terminal device, and the DB 2 includes information related to successful fallback of the terminal device. Therefore, it is easier for the terminal device to find an appropriate LTE cell in a short time by first searching for an appropriate LTE cell based on the DB 1 and the DB 2.

In some embodiments of this application, the historical fallback information may be a DB 2 mentioned below.

In some embodiments of this application, the terminal device first searches for an appropriate LTE cell based on the LTE frequency point in the first LTE frequency point information, and then searches for an appropriate LTE cell based on the historical fallback information if no appropriate LTE cell is found based on the LTE frequency point in the first LTE frequency point information.

In some embodiments of this application, the terminal device first searches for an appropriate LTE cell based on the historical fallback information, and then searches for an appropriate LTE cell based on the LTE frequency point in the first LTE frequency point information if no appropriate LTE cell is found based on the historical fallback information.

In some embodiments of this application, when the first historical fallback record exists in the historical fallback information, the terminal device may select some LTE frequency points from the DB 1 and the LTE frequency point that corresponds to the LTE cell camped on by the terminal device after fallback and that is included in the first historical fallback record, compare energy values of the LTE frequency points, and sequentially search, in descending order of energy, for an appropriate LTE cell on the LTE frequency points. If no appropriate LTE cell is found, the terminal device may select some other LTE frequency points according to the foregoing method again, and perform searching according to the foregoing steps.

With reference to the first aspect, in a possible implementation, the method further includes: If the LTE cell corresponding to the LTE frequency point in the first LTE frequency point information meets the second preset condition, and/or the LTE cell meeting the second preset condition is found by the terminal device based on the frequency point that corresponds to the LTE cell camped on by the terminal device after fallback and that is included in the first historical fallback record, the terminal device camps on the LTE cell meeting the second preset condition.

With reference to the first aspect, in a possible implementation, the method further includes: If the LTE cell corresponding to the LTE frequency point in the first LTE frequency point information does not meet the second preset condition, and the LTE cell meeting the second preset condition is not found by the terminal device based on the frequency point that corresponds to the LTE cell camped on by the terminal device after fallback and that is included in the first historical fallback record, the terminal device searches, based on fourth LTE frequency point information, for the LTE cell meeting the second preset condition.

With reference to the first aspect, in a possible implementation, the fourth LTE frequency point information specifically includes at least one of the following: a historical LTE frequency point, an LTE frequency point in a full frequency band, and an LTE frequency point in a prefer frequency band.

It may be understood that the third LTE frequency point information may be the same as or may be different from the fourth LTE frequency point information.

In some embodiments of this application, the fourth LTE frequency point information may be an LTE frequency point set_2.

With reference to the first aspect, in a possible implementation, the first LTE frequency point information includes a plurality of LTE frequency points, and the plurality of LTE frequency points include LTE frequency points respectively corresponding to a plurality of LTE neighboring cells of the first cell; and that the terminal device determines whether an LTE cell corresponding to the LTE frequency point in the first LTE frequency point information meets the second preset condition specifically includes: The terminal device sequentially determines, in descending order of signal strengths, whether LTE cells corresponding to the plurality of LTE frequency points meet the second preset condition.

In some embodiments of this application, the terminal device may search the LTE frequency points in the first LTE frequency point information in descending order of signal strengths. This manner makes it easier for the terminal device to find an appropriate LTE cell in a short time.

With reference to the first aspect, in a possible implementation, after the terminal device camps on the first cell, the method further includes: The terminal device receives fifth LTE frequency point information sent by a network device corresponding to the first cell, where the fifth LTE frequency point information includes LTE frequency points corresponding to LTE neighboring cells of the first cell. The terminal device measures signal strengths of LTE cells corresponding to the LTE frequency points included in the fifth LTE frequency point information, and/or detects bandwidths of the LTE cells corresponding to the LTE frequency points included in the fifth LTE frequency point information, and/or detects whether the LTE cells corresponding to the LTE frequency points included in the fifth LTE frequency point information are anchor cells, to obtain a first result. The terminal device sorts the LTE frequency points in the fifth LTE frequency point information based on the first result, to obtain the first LTE frequency point information. That the terminal device determines whether an LTE cell corresponding to the LTE frequency point in the first LTE frequency point information meets the second preset condition specifically includes: The terminal device sequentially determines, based on a sorting result, whether the LTE cells corresponding to the LTE frequency points in the first LTE frequency point information meet the second preset condition.

In some embodiments of this application, the fifth LTE frequency point information may be LTE frequency point information mentioned in step S102, step S202, and step S302. For details of the foregoing detection and measurement, refer to the following descriptions. Details are not described herein.

It may be understood that the first result may be a measurement detection result (for example, step S103) mentioned below.

With reference to the first aspect, in a possible implementation, the LTE cell meeting the first preset condition specifically includes: an LTE cell whose signal strength is greater than a first preset access threshold and to which access of the terminal device is not forbidden by the network side; and the LTE cell meeting the second preset condition specifically includes: an LTE cell whose signal strength is greater than a second preset access threshold and to which access of the terminal device is not forbidden by the network side.

In some embodiments of this application, the first preset access threshold may be the same as the second preset access threshold.

In some embodiments of this application, the first preset access threshold is greater than the second preset access threshold.

According to a second aspect, an embodiment of this application provides a communication method. The method is applied to a terminal device. The method includes: The terminal device camps on a first cell, where the first cell is an NR cell; The terminal device determines, in response to receiving a first message, whether historical fallback information includes a first historical fallback record, where the first message carries an indication to redirect to a target LTE frequency point; the target LTE frequency point is an LTE frequency point indicated by a network side for redirection; the historical fallback information includes at least one historical fallback record; each historical fallback record includes the following information in a historical fallback process in which the terminal device successfully falls back from NR to LTE: an LTE frequency point indicated by the network side for redirection, a frequency point corresponding to an NR cell camped by the terminal device before fallback, and a frequency point corresponding to an LTE cell camped on by the terminal device after fallback; and an NR cell that is camped on before fallback and that is included in the first historical fallback record is the first cell, and an LTE frequency point that is indicated by the network side for redirection and that is included in the first historical fallback record is the target LTE frequency point. If the historical fallback information includes the first historical fallback record, the terminal device searches, based on a frequency point that corresponds to an LTE cell camped on by the terminal device after fallback and that is included in the first historical fallback record, for an LTE cell meeting a first preset condition.

In solutions provided in some embodiments of this application, when the terminal device receives a message that is sent by the network side and that carries the indication to redirect to the target LTE frequency point, the terminal device may first search for an appropriate LTE cell based on information related to previous successful fallback. This manner can make it easier for the terminal device to find an appropriate LTE cell in a short time.

With reference to the second aspect, in a possible implementation, the method further includes: If the historical fallback information does not include the first historical fallback record, or the LTE cell meeting the first preset condition is not found by the terminal device based on the frequency point that corresponds to the LTE cell camped on by the terminal device after fallback and that is included in the first historical fallback record, the terminal device starts a first timer, and searches, based on the target LTE frequency point, for the LTE cell meeting the first preset condition. If the LTE cell meeting the first preset condition is still not found by the terminal device based on the target LTE frequency point until the first timer times out, the terminal device searches, based on a second LTE frequency point set, for an LTE cell meeting a second preset condition.

In the solution provided in this embodiment, if the terminal device does not find an appropriate LTE cell based on the information related to previous successful fallback, the terminal device may perform searching based on the LTE frequency point delivered by the network side for redirection, and start the first timer to control duration of searching based on the LTE frequency point delivered by the network side for redirection. This manner can prevent the terminal device from continuously performing searching on the target LTE frequency point when network signal coverage of the target LTE frequency point is weak and it is difficult to find, on the target LTE frequency point, the LTE cell meeting the first preset condition.

In some embodiments of this application, the second LTE frequency point set may include one or more of the following: a DB 1, an ACQ DB, some or all LTE frequency points in a full band, and some or all LTE frequency points in a prefer band.

With reference to the second aspect, in a possible implementation, the first preset condition is the same as or different from the second preset condition. That the first preset condition is different from the second preset condition specifically includes: A preset access threshold corresponding to the second preset condition is less than a preset access threshold corresponding to the first preset condition, where the preset access threshold is a signal quality threshold at which access to an LTE cell is allowed.

With reference to the second aspect, in a possible implementation, duration of the first timer is less than duration of a third timer started on the network side; and the third timer is used by the network side to control duration of fallback.

With reference to the second aspect, in a possible implementation, duration of a second timer is not less than the duration of the third timer started on the network side, and is not greater than x times the duration of the third timer; the third timer is used by the network side to control the duration of fallback; and x is not less than 1, and is not greater than 2.

With reference to the second aspect, in a possible implementation, the duration of the third timer is 5 seconds.

With reference to the second aspect, in a possible implementation, the second LTE frequency point set includes first LTE frequency point information and third LTE frequency point information; the first LTE frequency point information includes an LTE frequency point corresponding to an LTE neighboring cell of the first cell; and that the terminal device searches, based on a second LTE frequency point set, for an LTE cell meeting a second preset condition specifically includes: The terminal device determines whether an LTE cell corresponding to the LTE frequency point in the first LTE frequency point information meets the second preset condition. If all LTE cells corresponding to the LTE frequency point in the first LTE frequency point information do not meet the second preset condition, the terminal device searches, based on the third LTE frequency point information, for the LTE cell meeting the second preset condition.

With reference to the second aspect, in a possible implementation, the third LTE frequency point information specifically includes: at least one of a historical LTE frequency point, an LTE frequency point in a full frequency band, and an LTE frequency point in a prefer frequency band.

In some embodiments of this application, the third LTE frequency point information may be an LTE frequency point set_2.

With reference to the second aspect, in a possible implementation, the method further includes: The terminal device starts the second timer in response to the first message. If the LTE cell meeting the first preset condition is found when the first timer does not time out, the terminal device camps on the found LTE cell meeting the first preset condition. If the LTE cell meeting the second preset condition is found when the first timer times out and the second timer does not time out, the terminal device camps on the found LTE cell meeting the second preset condition. If the LTE cell meeting the first preset condition or the LTE cell meeting the second preset condition is still not found until the second timer times out, the terminal device selects a second cell to camp on, where the second cell is an NR cell.

In some embodiments of this application, the terminal device may start the second timer after receiving the message that is sent by the network side and that carries the indication to redirect to the target LTE frequency point, and control duration of an entire fallback process by using the second timer. In addition, the terminal device may start the first timer when no appropriate LTE cell is found based on the historical fallback information, and control, by using the first timer, duration of searching for an appropriate LTE cell based on the target LTE frequency point delivered by the network side for redirection. According to the method, a case in which a user cannot communicate for a long time due to excessively long fallback time can be avoided, and the terminal device can be prevented from continuously performing searching on the target LTE frequency point when the network signal coverage of the target LTE frequency point is weak and it is difficult to find, on the target LTE frequency point, the LTE cell meeting the first preset condition.

With reference to the second aspect, in a possible implementation, the method further includes: If the historical fallback information does not include the first historical fallback record, or the LTE cell meeting the second preset condition is not found by the terminal device based on the frequency point that corresponds to the LTE cell camped on by the terminal device after fallback and that is included in the first historical fallback record, the terminal device starts the second timer, where interval duration between a start moment of the first timer and a start moment of the second timer is short. If the LTE cell meeting the first preset condition is found when the first timer does not time out, the terminal device camps on the found LTE cell meeting the first preset condition. If the LTE cell meeting the second preset condition is found when the first timer times out and the second timer does not time out, the terminal device camps on the found LTE cell meeting the second preset condition. If the LTE cell meeting the first preset condition or the LTE cell meeting the second preset condition is still not found until the second timer times out, the terminal device selects a second cell to camp on, where the second cell is an NR cell.

In some embodiments of this application, the terminal device may start the first timer and the second timer when no appropriate LTE cell is found based on the historical fallback information, control, by using the first timer, duration of searching for an appropriate LTE cell based on the target LTE frequency point delivered by the network side for redirection, and control, by using the second timer, duration of an entire fallback process. According to the method, a case in which a user cannot communicate for a long time due to excessively long fallback time can be avoided, and the terminal device can be prevented from continuously performing searching on the target LTE frequency point when the network signal coverage of the target LTE frequency point is weak and it is difficult to find, on the target LTE frequency point, the LTE cell meeting the first preset condition.

According to a third aspect, an embodiment of this application provides a terminal device. The terminal device includes: one or more processors and one or more memories. the one or more memories are coupled to the one or more processors, the memory is configured to store computer program code, the computer program code includes computer instructions, and the one or more processors invoke the computer instructions to enable the terminal device to perform the method according to any one of the first aspect or the implementations of the first aspect.

According to a fourth aspect, this application provides a terminal device. The terminal device includes: one or more processors and one or more memories. the one or more memories are coupled to the one or more processors, the memory is configured to store computer program code, the computer program code includes computer instructions, and the one or more processors invoke the computer instructions to enable the terminal device to perform the method according to any one of the second aspect or the implementations of the second aspect.

According to a fifth aspect, this application provides a computer storage medium, including computer instructions. When the computer instructions are run on a terminal device, the terminal device is enabled to perform the method according to any one of the first aspect or the implementations of the first aspect, or the terminal device is enabled to perform the method according to any one of the second aspect or the implementations of the second aspect.

According to a sixth aspect, an embodiment of this application provides a chip system, applied to a terminal device. The chip system includes at least one processor and an interface, and the interface is configured to receive instructions and transmit the instructions to the at least one processor. The at least one processor executes the instructions, to enable the terminal device to perform the method according to any one of the first aspect or the implementations of the first aspect, or enable the terminal device to perform the method according to any one of the second aspect or the implementations of the second aspect.

In some embodiments of this application, the chip system may be a modem (modem), that is, a baseband processor, or a system on chip (System on Chip, SoC) including a modem. The method according to any one of the first aspect or the implementations of the first aspect may be implemented by one modem, and the method according to any one of the second aspect or the implementations of the second aspect may be implemented by one modem.

In some other embodiments of this application, the chip system may include a modem and another module. The another module may be an AP (Application Processor, application processor) or a GPU (Graphics Processing Unit, graphics processing unit).

According to a seventh aspect, an embodiment of this application provides a computer program product including instructions. When the computer program product is run on a terminal device, the terminal device is enabled to perform the method according to any one of the first aspect or the implementations of the first aspect, or the terminal device is enabled to perform the method according to any one of the second aspect or the implementations of the second aspect.

It may be understood that the terminal device, the computer storage medium, the chip system, and the computer program product provided above may perform any one of the methods provided above. Therefore, for beneficial effects that can be achieved, refer to the beneficial effects of the foregoing method. Details are not described herein again.

### BRIEF DESCRIPTION OF DRAWINGS

FIG. 1 is a schematic diagram of an example network architecture according to an embodiment of this application;
FIG. 2 is a schematic diagram of a voice call scenario according to an embodiment of this application;
FIG. 3A to FIG. 3F are a schematic diagram of a group of user interfaces according to an embodiment of this application;
FIG. 4 is a flowchart of fallback according to an embodiment of this application;
FIG. 5 is a flowchart of voice fallback in a mobile terminated scenario according to an embodiment of this application;
FIG. 6 is a flowchart of a communication method according to an embodiment of this application;
FIG. 7A is a flowchart of another communication method according to an embodiment of this application;
FIG. 7B is a flowchart of another communication method according to an embodiment of this application;
FIG. 8 is a flowchart of another communication method according to an embodiment of this application;
FIG. 9 is a schematic diagram of a hardware structure of a terminal device according to an embodiment of this application; and
FIG. 10 is a schematic diagram of a software structure of a terminal device according to an embodiment of this application.

### DESCRIPTION OF EMBODIMENTS

The following clearly and completely describes technical solutions in embodiments of this application with reference to accompanying drawings in embodiments of this application. In descriptions of embodiments of this application, "/" means "or" unless otherwise specified. For example, A/B may represent A or B. In this specification, "and/or" describes only an association relationship between associated objects and indicates that three relationships may exist. For example, A and/or B may indicate the following three cases: Only A exists, both A and B exist, and only B exists. In addition, in the descriptions of embodiments of this application, "a plurality of" means two or more than two.

It should be understood that terms "first", "second", and the like in the specification, the claims, and the accompanying drawings of this application are intended to distinguish between different objects, but are not intended to describe a specific order. In addition, terms "include", "have", and any variant thereof are intended to cover non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

An "embodiment" mentioned in this application means that a specific feature, structure, or characteristic described with reference to the embodiment may be included in at least one embodiment of this application. The phrase appearing in various locations in the specification does not necessarily mean a same embodiment, and neither means an independent or alternative embodiment mutually exclusive with another embodiment. It is explicitly and implicitly understood by a person skilled in the art that embodiments described in this application may be combined with another embodiment.

**For ease of understanding this application, some terms and related technologies of this application are first described, to facilitate understanding by a person skilled in the art.**

### 1. VoNR (Voice over NR, voice over NR)

VoNR is an abbreviation of voice over NR. VoNR means implementing high-definition voice and video services on only a 5G network. In other words, VoNR is a voice service based on the 5G network. Advantages of VoNR may specifically include: (1) When a terminal device camps on a 5G cell, it is simpler and more direct for the terminal device to use VoNR, and the terminal device does not need to fall back to a 4G network through EPS fallback, so that a signaling procedure and a delay can be reduced, and user experience can be improved. (2) VoNR supports enhanced voice services (Enhanced Voice Services, EVS), and can effectively improve sound quality of a voice call, so that the voice call reaches a high fidelity (High Fidelity, HiFi) level.

An overall procedure of VoNR includes: (1) The terminal device registers with a 5G gNB and a 5GC. After registration succeeds, an IP multimedia subsystem (IP Multimedia Subsystem, IMS) module in the terminal device triggers to establish a packet data unit (Packet Data Unit, PDU) bearer of IMS signaling over NR, then registers an IMS protocol stack, and enters a normal service state after registration succeeds. (2) A call-related service follows a VoLTE procedure. A dialing request (for example, a QMI request) is sent to a modem. The modem performs general call processing through a call management (Call Management, CM) module. If a current IMS is registered, the request is distributed to the IMS module. Processing of a VoNR call by the IMS module is similar to that of original VoLTE. It may be understood that the IMS module is a module inside the terminal device, and is configured to manage a related procedure and signaling transmission of the IMS. QMI is a communication interface, a full English name of QMI is Qualcomm modem interface, and a full Chinese name of QMI is Qualcomm modem communication interface.

It may be understood that gNB is an abbreviation of gNodeB, a full English name of gNB is next generation NodeB, and a Chinese meaning of gNB is a next generation base station, which refers to a 5G base station. A full English name of 5GC is 5G core, which refers to a 5G core network.

### 2. VoLTE

VoLTE is an abbreviation of voice over LTE. VoLTE is an IP data transmission technology, and does not require a 2G/3G network. All services are carried in a 4G network, so that data and voice services can be unified in a same network. In short, the 4G network not only provides high-rate data services, but also provides high-quality voice and video calls. This kind of technology that combines high-definition video calling is the VoLTE technology.

### 3. EPS fallback (evolved packet system voice fallback)

EPS fallback means that when a 5G network does not have a VoNR condition, a voice service falls back from the 5G network to a 4G network, and continuity of the voice service is ensured over VoLTE. Specifically, when the 5G network does not support the voice service, when UE initiates or receives a voice call in the 5G network, fallback to the 4G network may be implemented through redirection or handover, so that the voice service is provide by VoLTE. After the voice call is ended, the UE returns to the 5G network.

### 4. A cell (cell)

The cell is an area within wireless coverage of a network device (for example, a base station). In this area, a terminal device may reliably communicate with the network device by using a wireless signal. It may be understood that coverage of each network device may be divided into one or more cells, and each cell may correspond to one or more frequency points. It may also be understood that each cell is an area formed by coverage of the one or more frequency points.

Due to different factors such as coverage areas and transmit power, cells may be further classified into a macro cell (also referred to as a macro cellular cell), a micro cell (also referred to as a micro cellular cell), and the like. Compared with the micro cell, a coverage area of the macro cell is larger.

In some embodiments of this application, different cells may correspond to a same network device. In other words, a network device to which a cell A belongs and a network device to which a cell B belongs may be a same network device. For example, the cell A and the cell B may be managed by a same base station. In this case, it may be referred to as the cell A and the cell B being co-sited.

In some embodiments of this application, different cells may correspond to different network devices. In other words, a network device to which a cell A belongs and a network device to which a cell B belongs may be different network devices. For example, the cell A and the cell B may be managed by different base stations. For another example, the cell A and the cell B may be managed by a same base station, but radio frequency processing units corresponding to the cell A and the cell B are different radio frequency processing units in the same base station.

An adjacent cell, also referred to as a neighboring cell or a neighbor cell, is an area that is adjacent to a current serving cell and that is within wireless coverage of a network device that has a physical location association and transmits a signal on a same frequency or a different frequency. In other words, the adjacent cell refers to a cell connected to or adjacent to the current serving cell. In general terms, the adjacent cell may be understood as a "surrounding cell" of the current serving cell.

**To better understand a communication method and a related device provided in embodiments of this application, a network architecture used in embodiments of this application is first described below.**

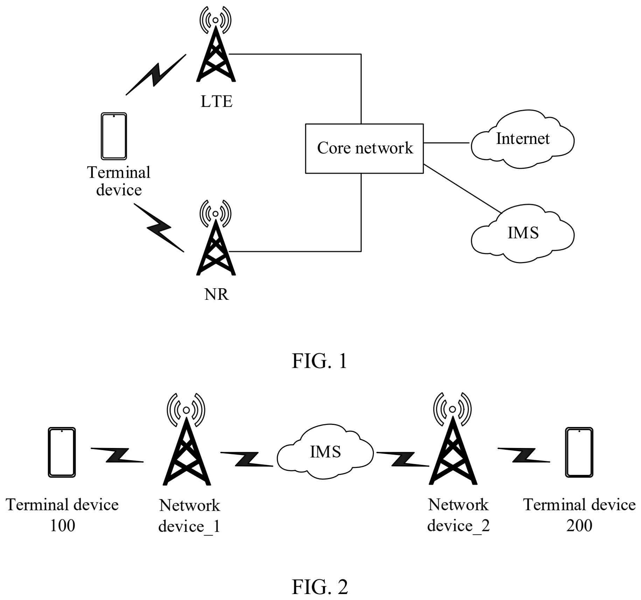

FIG. 1 is a schematic diagram of an example network architecture according to an embodiment of this application. As shown in FIG. 1, the network architecture may include a terminal device, an LTE, an NR, a core network, and an IMS or the internet (Internet). The following describes the network architecture in detail:
(1) Terminal device (terminal): The terminal device may also be referred to as user equipment (User Equipment, UE), a user terminal, a mobile station (Mobile Station, MS), a mobile terminal (Mobile Terminal, MT), or the like. The terminal device may be a device that includes a wireless transceiver function and that can cooperate with a network device to provide a communication service for a user. The terminal device may be a handheld terminal, a notebook computer, a subscriber unit (Subscriber Unit), a cellular phone (Cellular Phone), a smartphone (Smart Phone), a wireless data card, a personal digital assistant (Personal Digital Assistant, PDA) computer, a tablet computer, a wireless modem (Modem), a handheld (handheld) device, a laptop computer (Laptop Computer), a cordless phone (Cordless Phone) or a wireless local loop (Wireless Local Loop, WLL) station, a machine type communication (Machine Type Communication, MTC) terminal, a wearable device (for example, a smart watch, a smart band, or a pedometer), a vehicle-mounted device (for example, a car, a bicycle, an electric vehicle, a plane, a ship, a train, or a high-speed rail), a virtual reality (Virtual Reality, VR) device, an augmented reality (Augmented Reality, AR) device, a wireless terminal in industrial control (Industrial Control), a smart household device (for example, a refrigerator, a television, an air conditioner, or an electric meter), an intelligent robot, workshop equipment, a wireless terminal in self driving (Self Driving), a wireless terminal in remote medical surgery (Remote Medical Surgery), a wireless terminal in a smart grid (Smart Grid), a wireless terminal in transportation safety (Transportation Safety), a wireless terminal in a smart city (Smart City), a wireless terminal in a smart home (Smart Home), a flight device (for example, an intelligent robot or an unmanned aerial vehicle), a wireless terminal in a 5G network or a future communication network, or the like. This is not specifically limited in embodiments of this application.
(2) LTE: The LTE may be understood as a wireless access network of a 4G network. In the LTE network (commonly referred to as the 4G network), because of an evolution relationship, an access network part is referred to as an evolved UMTS terrestrial radio access network (Evolved UMTS Terrestrial Radio Access Network, E-UTRAN). In this application, the LTE and the E-UTRAN have a same meaning, and both refer to the access network part of the 4G network. A terminal device may access the LTE via a 4G base station.
(3) NR: The NR may be understood as a wireless access network of a 5G network. In the 5G network, an access network part is referred to as a next generation radio access network (Next Generation Radio Access Network, NG-RAN or NG RAN). In this application, the NR and the NG-RAN (or referred to as the NG RAN) have a same meaning, and both refer to the access network part of the 5G network.

It may be understood that, both the LTE and the NR are access networks. The access network is responsible for connecting a large quantity of end users (End User) to a core network (also referred to as a backbone network) step by step by using a wired or wireless connection and communication technology, to implement network connection. The access network is an edge part of an entire network and a part closest to the user, and is usually referred to as "the last mile".

(4) Core network: Main functions of the core network are providing a user connection, managing a user, and completing service bearing, and the core network serves as a bearer network to provide an interface to an external network. Establishment of the user connection includes functions such as mobility management (MM), call management (CM), switching/routing, and recording notification (completing a connection relationship to an intelligent network peripheral device in combination with an intelligent network service).

It may be understood that a core network of a 4G network is an evolved packet core (Evolved Packet Core, EPC) network. The EPC network is a core network of a 4G mobile communication network. The EPC network is a core network, has conventional capabilities of a mobile network such as user subscription data storage, mobility management, and data exchange, and can provide ultra-high-speed network access experience for a user. A core network of a 5G network is a 5G core (5GC for short). The 5GC uses a general-purpose network function virtualization device to replace a dedicated communication device of a 4G network.

It should be noted that the core network in the network architecture shown in FIG. 1 may be obtained by integrating the EPC and the 5GC. In other words, the core network in the network architecture may include a network element in the EPC, and may include a network element in the 5GC. For example, the core network in the network architecture may include an access and mobility management function (Access and Mobility Management Function, AMF) network element, a mobility management entity (Mobility Management Entity, MME) network element, a serving gateway (Serving GateWay, SGW) network element, a packet data network gateway (Packet Data Network GateWay, PGW) network element, a session management function (Session Management Function, SMF) network element, a user plane function (User Plane Function, UPF) network element, a unified data management (Unified Data Management, UDM) network element, a home subscriber server (Home Subscriber Server, HSS) network element, and the like.

In some embodiments of this application, the core network in the network architecture may include a network element obtained by integrating a network element in the EPC and a network element in the 5GC, for example, an SMF+PGW-C, a UPF+PGW-U, and a UDM+HSS. The PGW-C is a control plane node of the PGW network element, and the PGW-U is a user plane node of the PGW network element.

In some embodiments of this application, the core network in the network architecture shown in FIG. 1 may include a proxy session border control (Proxy Session Border Control, PSBC) network element, which is a network element integrating a session border control (Session Border Control, SBC), a proxy call session control function (Proxy-CSCF, P-CSCF), an access transfer control function (Access Transfer Control Function, ATCF), and an access transfer gateway (Access Transfer Gateway, ATGW). When used as the SBC network element, the PSBC network element connects an IMS core network/softswitch network and an external user access area, to implement service access of an IMS/softswitch user, implement interworking of user services in different network environments, ensure security of the IMS/softswitch network, and support functions such as QoS management, CAC traffic control, media management, and a CDR media call detail record.

Network elements in the core network may also be referred to as functional entities, and may be network elements implemented on dedicated hardware, may be software functions running on dedicated hardware, or may be instances of functions virtualized on an appropriate platform.

It should be understood that names of all network elements in this application are merely used as examples. In future communication, for example, 6G, the network element may have another name. Alternatively, in future communication, for example, 6G, the network element in this application may be replaced with another entity or device having a same function. This is not limited in this application. This is uniformly described herein, and details are not described subsequently. Optionally, the network elements in embodiments of this application may be communication devices, or may be chips, chip systems, or the like that may be used in the communication devices. This is not limited in embodiments of this application.

It may be understood that the core network in the network architecture shown in FIG. 1 may further include another device, network element, network entity, or network subsystem, for example, a policy control function (Policy Control function, PCF) network element. This is not limited in this application. It should be noted that a distribution manner of the network elements in the core network is not limited in this application. For details of the distribution manner, refer to a related technical document. Details are not described herein in this application.

(5) The IMS is a network architecture that provides voice and multimedia communication services (such as a voice, a video, and a text message) based on an internet protocol (Internet Protocol, IP) network. The IMS may implement secure and reliable multimedia communication between different devices of different networks. An architecture model provides a unified infrastructure and a general mechanism, used for controlling, operating, routing, and managing sessions, and implementing identity authentication, authorization, and accounting control. The IMS specification includes widely used internet engineering task force (The Internet Engineering Task Force, IETF) recommendations, for example, a session initiation protocol (Session initialization Protocol, SIP) used for session control signaling.

The internet generally refers to an interconnected network, is also referred to as an international network, and refers to a vast network formed by connecting networks in series. These networks are connected by using a group of common protocols, to form a logically single and vast international network. From the perspective of network communication, the internet is a data communication network that connects computer networks of various countries, regions, and institutions around the world by using the transmission control protocol (Transmission Control Protocol, TCP)/internet protocol (Internet Protocol, IP).

It should be noted that the network architecture shown in FIG. 1 is not limited to including only the devices and networks shown in the figure, and may further include another device not shown in the figure. This application does not enumerate such devices one by one. It should be further noted that the network architecture shown in FIG. 1 does not constitute a limitation on the 5G network.

**To better understand embodiments of this application, the following describes an application scenario in embodiments of this application.**

In a mobile communication system, to ensure continuity of a service (for example, a voice service) performed by a terminal device, when a currently registered network cannot provide the corresponding service (for example, the voice service), the corresponding service needs to be provided by falling back to another appropriate network. For example, when the terminal device or a network side cannot use VoNR (for example, the terminal device or the network side does not support VoNR, or does not turn on a VoNR switch) or a signal of an NR cell is poor (that is, 5G network signal coverage is weak), the terminal device may fall back from a 5G network to a 4G network.

**The following describes in detail the application scenario in embodiments of this application by using fallback of a voice service as an example.**

FIG. 2 is a schematic diagram of a voice call scenario according to an embodiment of this application. As shown in FIG. 2, a terminal device 100 may perform voice data transmission with a terminal device 200 through a network device_1, an IMS, and a network device_2. The network device_1 is a network device corresponding to a cell on which the terminal device 100 currently camps, and the network device_2 is a network device corresponding to a cell on which the terminal device 200 currently camps. In some embodiments of this application, the network device_1 and the network device_2 may be a same network device. In some embodiments of this application, the terminal device 100 may be a party that initiates a voice call, to request to perform the voice call with the terminal device 200. In some other embodiments of this application, the terminal device 200 may be a party that initiates a voice call, to request to perform the voice call with the terminal device 100.

The network device in embodiments of this application may be a device configured to communicate with a terminal device. For example, the network device may be a base station (Base Transceiver Station, BTS) in a global system for mobile communications (Global System for Mobile Communications, GSM) or a code division multiple access (Code Division Multiple Access, CDMA) system, may be a base station (NodeB, NB) in a wideband code division multiple access (Wideband Code Division Multiple Access, WCDMA) system, may be an evolved base station (evolutional NodeB, eNB or eNodeB) in an LTE system, or may be a wireless controller in a cloud radio access network (Cloud Radio Access Network, CRAN) scenario. Alternatively, the network device may be a relay station, an access point, a vehicle-mounted device, a wearable device, a network device in a future 5G network or a network after 5G, a network device in a future evolved PLMN, or the like, for example, a transmission point (TRP or TP) in an NR system, a base station (gNB) in the NR system, one antenna panel or a group of antenna panels (including a plurality of antenna panels) of a base station in a 5G system. This is not limited in embodiments of this application.

Optionally, the base station in embodiments of this application may include various forms of base stations, for example, a macro base station, a micro base station (also referred to as a small cell), a relay station, an access point, a next generation NodeB (gNodeB, gNB), a transmission and reception point (Transmitting and Receiving Point, TRP), a transmission point (Transmitting Point, TP), a mobile switching center, and a device that undertakes a base station function in device-to-device (Device-to-Device, D2D), vehicle-to-everything (Vehicle-to-Everything, V2X), and machine-to-machine (Machine-to-Machine, M2M) communication. This is not specifically limited in embodiments of this application.

In the voice call scenario shown in FIG. 2, if a 5G network currently registered by the terminal device cannot provide a voice service, the terminal device may fall back to a 4G network to provide the voice service. In a process of falling back from the 5G network to the 4G network, the terminal device may not be able to perform a voice call due to a fallback failure.

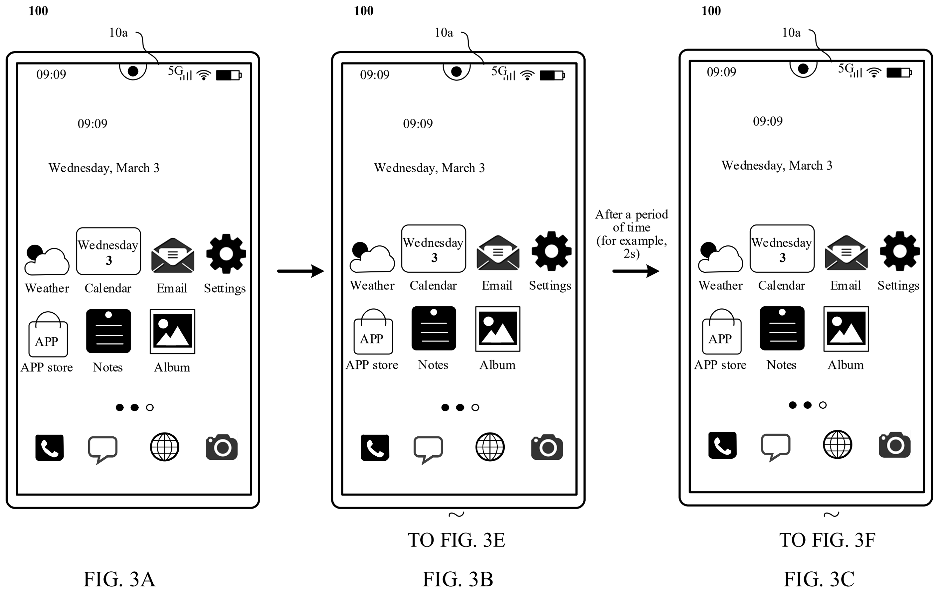

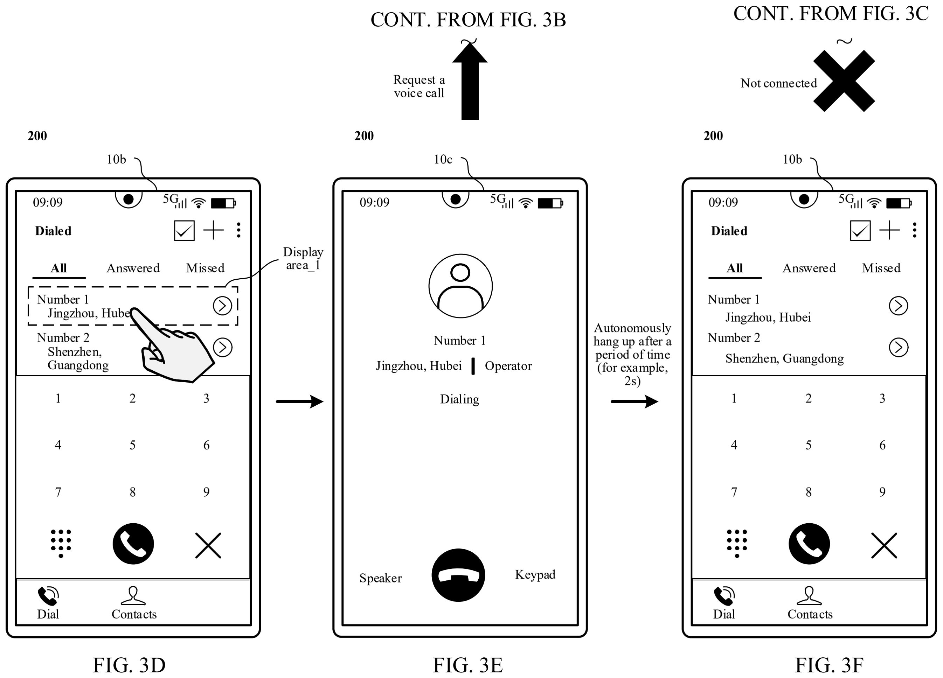

For example, as shown in FIG. 3A to FIG. 3F, the terminal device 100 may display a user interface 10a, and the terminal device 200 may display a user interface 10b. The user interface 10b may include a display area_1, and the display area_1 may display a number 1. The terminal device 200 may detect a user operation performed on the display area_1. In response to the user operation, the terminal device 200 may dial the number 1, to be specific, request a voice call to the terminal device 100 on which a subscriber identity module (Subscriber Identity Module, SIM) card corresponding to the number 1 is set, and display a user interface 10c. The user interface 10c is a dialing interface. When the terminal device 200 displays the user interface 10c, the terminal device 100 still displays the user interface 10a. It may be understood that the terminal device 200 originally camps on an NR cell. Because the 5G network cannot provide the voice service, the terminal device 200 may fall back to the 4G network to provide the voice service. However, in a fallback process, the terminal device 200 always cannot find an appropriate LTE cell to access. Consequently, fallback fails. As shown in FIG. 3A to FIG. 3F, after the terminal device 200 dials for a period of time (for example, 2s), the terminal device 200 automatically hangs up. In this case, the terminal device 100 still displays the user interface 10a, and a user cannot sense an incoming call. It may be understood that, after the terminal device 200 automatically hangs up, the terminal device 200 may display the user interface 10b. In this case, the terminal device 100 still displays the user interface 10a.

According to the foregoing descriptions, if the terminal device is a called party (that is, another device requests to establish a call with the terminal device), once fallback fails, a user cannot sense an incoming call. However, if the terminal device is a calling party (that is, the terminal device requests to establish a call with another device), the terminal device may display a corresponding dialing interface. Once fallback fails, and a called party makes no response, the terminal device automatically hangs up.

**The following describes in detail a cause for a fallback failure in embodiments of this application with reference to a fallback procedure.**

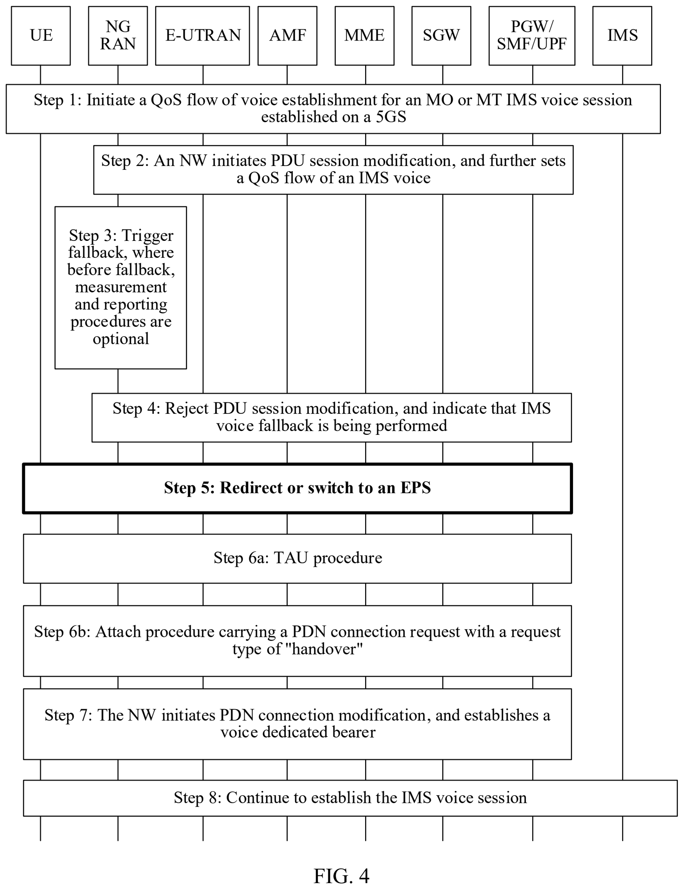

FIG. 4 is a flowchart of fallback according to an embodiment of this application. As shown in FIG. 4, a network architecture for implementing a voice service fallback procedure may include: a terminal device, an NG RAN, an E-UTRAN, an AMF/MME, an SGW, a PGW/SMF/UPF, and an IMS. Specific steps of the fallback procedure may include:

Step 1: Initiate a quality of service (Quality of Service, QoS) flow of voice establishment for a mobile original (Mobile Original, MO) or mobile terminated (Mobile Terminated, MT) IMS voice session established on a 5GS (5G System).

The 5G system is a collective name of all 5G network elements, and includes a 5G radio access network (NG-RAN) and a 5G core network (5G Core, 5GC).

Step 2: An NW initiates PDU session modification, and further sets a QoS flow of an IMS voice.

It may be understood that a wireless communication network may be referred to as a network for short, and is abbreviated as NW.

Step 3: Trigger fallback, where before fallback, measurement and reporting procedures are optional.

Step 4: Reject PDU session modification, and indicate that IMS voice fallback is being performed.

Step 5: Redirect or switch to an EPS.

Step 6a: Tracking area update (Tracking Area Update, TAU) procedure.

Step 6b: Attach (attach) procedure carrying a packet data network (Packet Data Network, PDN) connection request with a request type of "handover (handover)".

Step 7: The NW initiates PDN connection modification, and establishes a voice dedicated bearer.

Step 8: Continue to establish the IMS voice session.

It may be understood that for specific content of the fallback procedure, refer to the 3GPP TS23.502 protocol. Details are not described herein.

It can be learned from the voice fallback procedure from the 5G network to the 4G network that redirection is one of common manners of fallback. Specifically, a network side gives an LTE frequency point through redirection, and a terminal device searches for an LTE cell corresponding to the LTE frequency point. When a signal of the LTE cell corresponding to the LTE frequency point given by the network side is weak, the terminal device may not find an appropriate LTE cell for a long time. Generally, both the network side and the terminal device are configured with timers related to fallback. Because time for searching for and accessing the LTE cell is long, the timer related to fallback may time out before a dedicated bearer is established. Once the timer times out, it indicates that a current voice service fails.

For example, an office is covered by a cell A and a cell B. The cell A is an NR cell, that is, a cell covered by a 5G network, and the cell B is an LTE cell, that is, a cell covered by a 4G network. The cell B is a macro cell. Due to causes such as object blockage, signals of the cell A and the cell B are weak, resulting in poor call quality when a call is performed in the office. Subsequently, after receiving this feedback, an operator adds a cell C to provide coverage for the office, but does not modify an LTE frequency point, that is, a frequency point K, indicated by the network side for fallback redirection. The cell C is a indoor distributed cell, and a signal of the cell C is strong. In this case, once a fallback procedure is triggered, the network side still makes the terminal device to search for a cell corresponding to the frequency point K, and searching is expanded only when the cell corresponding to the frequency point K is not found, to find the cell C, which causes long fallback time.

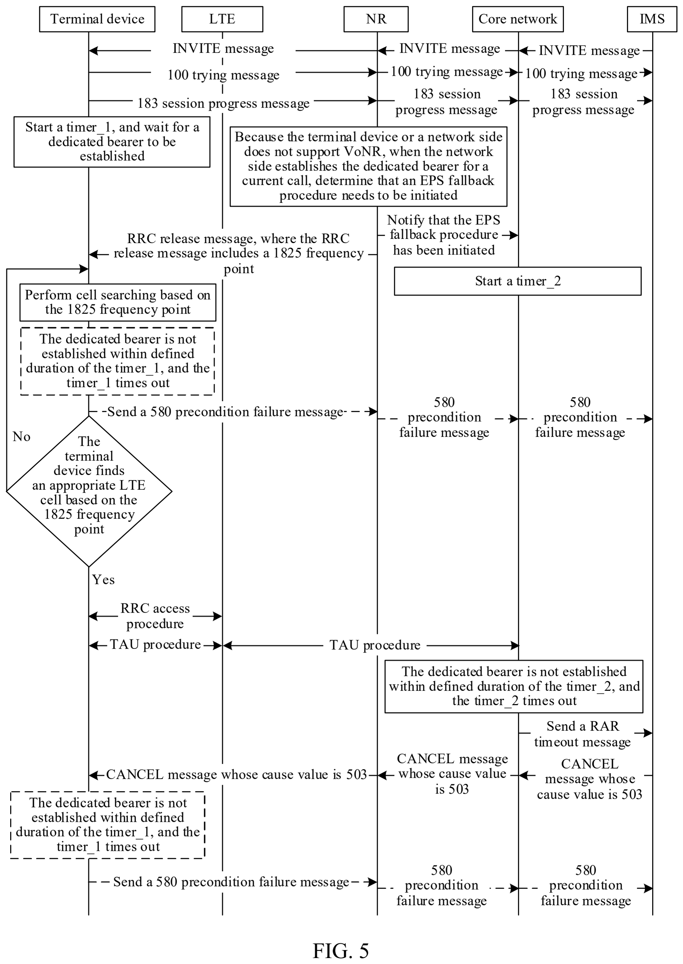

For example, FIG. 5 is a flowchart of voice fallback in a mobile terminated scenario according to an embodiment of this application. As shown in FIG. 5, a terminal device originally camps on an NR cell. After receiving an INVITE message, the terminal device may send a 100 trying message and a 183 session progress (session progress) message to an NR, start a timer_1, and wait for a dedicated bearer (also referred to as a specific-purpose bearer) to be established. In some embodiments of this application, the timer_1 may be a QoS timer. Correspondingly, the NR may continue to send, to a core network, the 100 trying message and the 183 session progress message that are sent by the terminal device, and the core network sends the 100 trying message and the 183 session progress message to an IMS. Because the terminal device or a network side does not support VoNR, when the network side establishes the dedicated bearer for a current call, an access network (for example, the NR shown in FIG. 1) determines that an EPS fallback procedure needs to be initiated, and notifies the core network that the EPS fallback procedure has been initiated. After receiving the notification that the EPS fallback procedure has been initiated, the core network may start a timer_2. In some embodiments of this application, a PSBC network element in the core network may start the timer_2 whose defined duration is six seconds (s) to wait for completion of a re-authentication/authorization request (Re-Auth-Request, RAR) procedure. After the NR notifies the core network that the EPS fallback procedure has been initiated, the NR sends an RRC release (RRC Release) message to the terminal device. RRC refers to radio resource control, that is, radio resource control. The RRC release message includes redirectedCarrierInfo for redirecting to an evolved UMTS terrestrial radio access (Evolved UMTS Terrestrial Radio Access, EUTRA), and redirectedCarrierInfo may include related information such as a frequency point. It may be understood that the frequency point included in redirectedCarrierInfo is a target LTE frequency point indicated by the network side for redirection. Subsequently, the terminal device may attempt to camp on a corresponding cell based on the frequency point included in redirectedCarrierInfo. In other words, the terminal device may redirect from a 5G communication system to a 4G communication system based on the RRC release message. As shown in FIG. 5, the RRC release message includes a 1825 frequency point, and the 1825 frequency point is an LTE frequency point given by the network side for redirection. After receiving the RRC release message sent by the NR, the terminal device may perform cell searching based on the 1825 frequency point, that is, search for an LTE cell whose corresponding frequency point is the 1825 frequency point. If the terminal device finds an appropriate LTE cell on the 1825 frequency point, that is, determines that an appropriate LTE cell exists in an LTE cell corresponding to the 1825 frequency point, the terminal device may perform RRC access and trigger a tracking area update (Tracking Area Update, TAU) procedure. Because a signal of the LTE cell corresponding to the 1825 frequency point is weak (for example, because the signal of the LTE cell corresponding to the 1825 frequency point is weak due to causes such as a long distance between a base station and the terminal device or blockage), the terminal device does not find an LTE cell on the 1825 frequency point in a long time. Alternatively, the terminal device finds an LTE cell whose corresponding frequency point is the 1825 frequency point, but a signal of the LTE cell corresponding to the frequency point is weak and does not satisfy an access threshold, and consequently the terminal device cannot access the LTE cell. Alternatively, the terminal device finds an LTE cell whose corresponding frequency point is the 1825 frequency point. Although a signal of the LTE cell satisfies an access threshold, it is difficult to send/receive signaling in an access process due to the weak signal of the LTE cell, resulting in long access time.

Based on the foregoing cases, as shown in FIG. 5, in a possible implementation, the terminal device may not be able to fall back to the LTE cell because the terminal device cannot find an appropriate LTE cell on the 1825 frequency point for a long time (for example, the terminal device cannot find an LTE cell on the 1825 frequency point for a long time; or the terminal device finds the LTE cell whose corresponding frequency point is the 1825 frequency point, but the signal of the LTE cell corresponding to the frequency point is weak and does not meet the access threshold, and consequently the terminal device cannot access the LTE cell). Consequently, the dedicated bearer cannot be established within defined duration of the timer_1, that is, the timer_1 times out. In this case, the terminal device sends a 580 precondition failure (precondition failure) message to the network side, which indicates that the terminal device fails to receive a current mobile-terminated call.

Based on the foregoing cases, as shown in FIG. 5, in a possible implementation, it may be difficult to send/receive signaling in the access process because the signal of the appropriate LTE cell found by the terminal device on the 1825 frequency point is weak, causing long access time. Consequently, the dedicated bearer cannot be established within defined duration of the timer_1, that is, the timer_1 times out. In this case, the terminal device sends a 580 precondition failure message to the network side, which indicates that the terminal device fails to receive a current mobile-terminated call.

Similarly, as shown in FIG. 5, in a possible implementation, it may be difficult to send/receive signaling in the access process because the signal of the appropriate LTE cell found by the terminal device on the 1825 frequency point is weak, causing long access time. Consequently, the dedicated bearer cannot be established within the defined duration of the timer_2, that is, the timer_2 times out. In this case, the core network sends a RAR timeout (timeout) message to the IMS. After receiving the RAR timeout message, the IMS may deliver, to the terminal device, a CANCEL message whose cause value is 503, to indicate that the terminal device fails to receive a current mobile-terminated call. The CANCEL message may carry "RAR timeout".

In some embodiments of this application, a moment at which the timer_2 times out is later than a moment at which the timer_1 times out. As shown in FIG. 5, in a possible implementation, the moment at which the timer_1 times out is earlier than a moment at which the terminal device finds an appropriate LTE cell based on the 1825 frequency point, and the moment at which the timer_2 times out is later than the moment at which the terminal device finds an appropriate LTE cell based on the 1825 frequency point.

In some embodiments of this application, the moment at which the timer_2 times out is earlier than the moment at which the timer_1 times out. As shown in FIG. 5, in a possible implementation, the moment at which the timer_1 times out and the moment at which the timer_2 times out are both later than the moment at which the terminal device finds an appropriate LTE cell based on the 1825 frequency point, but the moment at which the timer_2 times out is earlier than the moment at which the timer_1 times out.

It may be understood that, the INVITE message, the 100 trying message, the 183 session progress message, and the 580 precondition failure messages are all session initiation protocol (Session Initiation Protocol, SIP) messages. The INVITE message is an incoming call request received by the terminal device, the 100 trying message is a response message sent by the terminal device to the network side for the incoming call request, the 183 session progress message is used to prompt progress information of establishing a voice call, and the 580 precondition failure message is used to indicate a dedicated bearer establishment failure.

It may be understood that VoLTE implements a voice session signaling procedure according to the SIP. The SIP is a protocol used to establish, modify, and terminate a multimedia session. These sessions may be in audio, video, chat, or other multimedia forms. A basic principle of the SIP is to establish a session description protocol (Session Description Protocol, SDP) to describe an attribute and a media type of a session, and then use an SIP message to negotiate a session parameter and control session establishment and termination. SIP messages include requests and responses. The requests include INVITE, ACK, BYE, CANCEL, OPTIONS, REGISTER, INFO, and the like. The responses include 1xx, 2xx, 3xx, 4xx, 5xx, 6xx, and the like. The SIP further defines some status codes, used to indicate statuses of calls, such as ringing, answering, and hangup.

Based on the foregoing content, embodiments of this application provide a communication method. According to the communication method, the terminal device may store, after fallback succeeds, related information (for example, a frequency point, a cell ID, and a signal strength) of an LTE frequency point indicated by a network side for redirection of the fallback, a frequency point corresponding to an NR cell camped on before fallback, an LTE cell camped on after fallback succeeds; and the terminal device may measure an LTE frequency point before fallback and store related information of the LTE frequency point. The terminal device may search for an appropriate LTE cell based on the measured LTE frequency point and/or the stored related information, corresponding to a previous successful fallback process, of the frequency point of the NR cell camped on before fallback and the LTE cell camped on after fallback succeeds. If the terminal device finds an appropriate LTE cell, the terminal device accesses the LTE cell. Otherwise, the terminal device attempts to perform searching on another LTE frequency point (for example, an ACQ DB, an LTE frequency point in a full band, or an LTE frequency point in a prefer band) in another manner. According to this method, it is easier for the terminal device to quickly find an optimal frequency point and access a corresponding cell in a short time.

**The following describes a communication method according to an embodiment of this application.**

FIG. 6 is a flowchart of a communication method according to an embodiment of this application. The communication method may include but is not limited to the following steps:
S1: A terminal device camps on an NR cell.

It may be understood that the terminal device may camp on the NR cell. In other words, the terminal device may camp on a cell covered by a 5G network. In some embodiments of this application, the terminal device may perform a voice service when camping on the NR cell.

S2: The terminal device starts a timer T1 and a timer T2 in response to receiving an RRC release message carrying a redirection indication. Defined duration of the timer T2 is greater than defined duration of the timer T1. The redirection indication includes a target LTE frequency point indicated by a network side for redirection. The redirection indication is used to indicate the terminal device to fall back from the camped NR cell to a cell corresponding to the target LTE frequency point.

In some embodiments of this application, when the terminal device/the network side does not support VoNR, or the terminal device does not turn on a VoNR switch, if the terminal device performs a voice call when the terminal device camps on the NR cell, when the network side establishes a dedicated bearer for the voice call, an NR determines that an EPS fallback procedure needs to be initiated, and notifies a core network that the EPS fallback procedure has been initiated. In this case, the terminal device may receive the RRC release message that carries the redirection indication and that is sent by the NR. The terminal device may start the timer T1 and the timer T2 in response to receiving the RRC release message that carries the redirection indication and that is sent by the NR.

In some embodiments of this application, when a signal of the NR cell on which the terminal device camps is poor, the network side may initiate a fallback procedure in a redirection manner. In this case, similar to the foregoing descriptions, the terminal device may receive the RRC release message that carries the redirection indication and that is sent by the NR. The terminal device may start the timer T1 and the timer T2 in response to receiving the RRC release message that carries the redirection indication and that is sent by the NR.

It may be understood that the redirection indication includes the target LTE frequency point indicated by the network side for redirection. The redirection indication is used to indicate the terminal device to fall back from the camped NR cell to the cell corresponding to the target LTE frequency point. In some embodiments of this application, the redirection indication may be redirectedCarrierInfo mentioned above.

In some embodiments of this application, the terminal device may start the timer T1 and the timer T2 at the same time. In some embodiments of this application, interval duration between a start moment of the timer T1 and a start moment of the timer T2 is short. It may be understood that that interval duration between a start moment of the timer T1 and a start moment of the timer T2 may include: The terminal device starts the timer T1 and the timer T2 at the same time. In this case, the interval duration between the start moment of the timer T1 and the start moment of the timer T2 is so short as to be negligible.

In a possible implementation, that interval duration between a start moment of the timer T1 and a start moment of the timer T2 may specifically include: The interval duration between the start moment of the timer T1 and the start moment of the timer T2 is less than a duration threshold. It may be understood that the duration threshold may be set according to an actual requirement. This is not specifically limited in this application. For example, the duration threshold may be less than one millisecond.

It may be understood that, the defined duration of the timer T2 is greater than the defined duration of the timer T1. The defined duration of the timer T1 and the defined duration of the timer T2 may be set according to an actual requirement. This is not specifically limited in this application.

In some embodiments of this application, the defined duration of the timer T1 is not less than 300 milliseconds (ms) and is not greater than 500 ms. In some embodiments of this application, the defined duration of the timer T2 is 10s.

In some embodiments of this application, the defined duration of the timer T1 is less than defined duration of a fallback timer started on the network side. In some embodiments of this application, the defined duration of the timer T2 is greater than the defined duration of the fallback timer started on the network side. In a possible implementation, the defined duration of the timer T2 is x times the defined duration of the fallback timer started on the network side. x is greater than 1. For example, x may be in a preset range. It may be understood that the preset range may be set according to an actual requirement. For example, the preset range may be specifically (1, 2]. That is, x may be greater than 1 and not greater than 2.

The fallback timer started on the network side may be used to control duration of the fallback procedure. If fallback does not succeed within the defined duration of the fallback timer started on the network side, it indicates that fallback fails, and the fallback procedure is terminated. It may be understood that the defined duration of the fallback timer started on the network side is not specifically limited in this application. For example, the defined duration of the fallback timer started on the network side may be 5s. In this case, for example, the defined duration of the timer T1 may be less than 5s, and the defined duration of the timer T2 may be greater than 5s and not greater than 10s. Specifically, the defined duration of the timer T1 may be 300 ms, and the defined duration of the timer T2 may be 10 s.

It may be understood that, after receiving the RRC release message carrying the redirection indication, the terminal device disconnects an RRC connection to a network device corresponding to the camped NR cell. Therefore, subsequently, if fallback fails because an appropriate LTE cell cannot be found, the terminal device may reselect an NR cell to camp on and establish an RRC connection to a network device corresponding to the reselected NR cell. It may be understood that, the NR cell on which the terminal device originally camps before receiving the RRC release message carrying the redirection indication may be the same as or different from the reselected NR cell.

S3: The terminal device searches for an appropriate LTE cell based on the target LTE frequency point indicated by the network side for redirection.

After starting the timer T1 and the timer T2, the terminal device may search for an appropriate LTE cell based on the target LTE frequency point indicated by the network side for redirection. In some embodiments of this application, the appropriate LTE cell may be: an LTE cell whose signal quality meets an access threshold and to which access of the terminal device is not forbidden by the network side.

In some embodiments of this application, that signal quality meets an access threshold may specifically include: One or more of signal parameters such as reference signal received power (Reference Signal Receiving Power, RSRP), reference signal received quality (Reference Signal Received Quality, RSRQ), and a signal-to-noise ratio (SIGNAL NOISE RATIO, SNR) meet the corresponding access threshold. It may be understood that, the RSRP is a key parameter that can represent a wireless signal strength in an LTE network and one of physical layer measurement requirements, and is an average value of signal power received on all REs (resource elements) that carry reference signals within a symbol. It may be understood that the RSRP may reflect a strength of a useful signal in a cell. The RSRQ mainly measures received quality of a downlink reference signal of a specific cell. The RSRQ is defined as N*RSRP/RSSI. N is a quantity of resource blocks (RBs) within a measurement bandwidth of a received signal strength indicator (Received Signal Strength Indicator, RSSI) of an LTE carrier. The RSSI refers to total power received by a mobile phone, and includes a useful signal, interference, and a noise floor. The SNR generally refers to a signal to interference plus noise ratio (Signal to Interference plus Noise Ratio, SINR), and refers to a ratio of a strength of a received useful signal to a strength of a received interference signal (noise and interference).

It may be understood that the signal quality mentioned in this application may include a signal strength, and may be specifically represented by any one or more parameters such as an RSRP, an SNR, and an RSRQ.

S4: If the terminal device still does not find an appropriate LTE cell based on the target LTE frequency point indicated by the network side for redirection until the timer T1 times out, the terminal device performs searching on a frequency point in an LTE frequency point set_1. The LTE frequency point set_1 includes at least one LTE frequency point different from the target LTE frequency point.

If the terminal device still does not find an appropriate LTE cell based on the target LTE frequency point indicated by the network side for redirection until the timer T1 times out, the terminal device performs searching on the LTE frequency point set_1 based on a preset sequence_1. It may be understood that, the LTE frequency point set_1 may include frequency points of one or more sources. For frequency points of different sources, refer to the following content:
In some embodiments of this application, the LTE frequency point set_1 may include some or all LTE frequency points in an ACQ DB (acquaintance data base, list of historical camped frequency points), some or all LTE frequency points in a full band (full frequency band), and/or some or all LTE frequency points in a prefer band (prefer frequency band). The ACQ DB includes a frequency point corresponding to an LTE cell on which the terminal device has previously camped (that is, a historical LTE frequency point). In addition, according to an update mechanism of the ACQ DB, a quantity of historical LTE frequency points stored by the terminal device is limited, and the stored historical LTE frequency point is updated by using a first-store first-out mechanism. Consequently, a probability that the terminal device quickly finds an appropriate LTE cell is low. In some embodiments of this application, the ACQ DB may further include other related information of the historical LTE frequency point. For example, the ACQ DB may further include one or more pieces of information such as a signal strength (for example, an RSRP, an SNR, and/or an RSRQ) and a bandwidth of a cell corresponding to the historical LTE frequency point, whether the cell is an anchor cell, and whether the cell is a high-speed rail cell. The full band includes a large quantity of frequency points, and it takes a long time for the terminal device to search the full band. In this way, the probability that the terminal device quickly finds an appropriate LTE cell is not high either. The prefer band is a frequency band to which a frequency point of a cell to which the terminal device preferably accesses belongs, and includes a large quantity of frequency points, and it takes a long time for the terminal device to search the prefer band. In this way, the probability that the terminal device quickly finds an appropriate LTE cell is not high either.

In some embodiments of this application, the LTE frequency point set_1 may include a frequency point in a DB 1. The DB 1 may include a frequency point corresponding to an LTE neighboring cell of an NR cell on which the terminal device has camped (including the NR cell on which the terminal device currently camps).

It may be understood that the DB 1 may further include other related information of the frequency point corresponding to the LTE neighboring cell of the NR cell on which the terminal device has camped (including the currently camped NR cell), for example, a signal strength, a bandwidth, whether the cell is an anchor cell, and whether the cell is a high-speed rail cell.

In some embodiments of this application, when the DB 1 not only includes a frequency point corresponding to an LTE neighboring cell of the NR cell on which the terminal device currently camps, but also includes a frequency point corresponding to an LTE neighboring cell of another NR cell on which the terminal device previously camped, the LTE frequency point set_1 may include the frequency point that corresponds to the LTE neighboring cell of the NR cell on which the terminal device currently camps and that is included in the DB 1, but does not include the frequency point corresponding to the LTE neighboring cell of the another NR cell on which the terminal device previously camped.

In a possible implementation, the LTE frequency point set_1 may include some LTE frequency points in the DB 1, for example, top y LTE frequency points obtained after LTE frequency points in the DB 1 are sorted (for example, y LTE frequency points with top y corresponding signal strengths). It may be understood that a sorting method may be related to information such as a signal strength and a bandwidth of an LTE cell corresponding to the LTE frequency in the DB 1, whether the LTE cell is an anchor cell, and whether the LTE cell is a high-speed rail cell. For details, refer to the following descriptions, and details are not described herein. y is a positive integer, and y is less than a quantity of all frequency points in the DB 1. In another possible implementation, the LTE frequency point set_1 may include all LTE frequency points in the DB 1.

It may be understood that the DB 1 includes the frequency point corresponding to the LTE neighboring cell of the NR cell on which the terminal device currently camps. Compared with the ACQ DB, the DB 1 includes updated LTE neighboring cell information, and there is a higher possibility that the terminal device performs searching on the frequency points in the DB 1 to find an appropriate LTE neighboring cell and accesses the cell.

In some embodiments of this application, the LTE frequency point set_1 may include some or all LTE frequency points in a DB 2. The DB 2 includes a target LTE frequency point indicated by the network side for redirection, a frequency point corresponding to an NR cell camped on before fallback, and a frequency point corresponding to an LTE cell camped on after fallback succeeds in each of one or more processes of historical fallback (Fallback) to the LTE.

It may be understood that, the historical fallback process mentioned in this application refers to a previous process that the terminal device successfully fell back from the 5G network to the 4G network. It may be understood that, the terminal device may search for an appropriate LTE cell for this time of fallback based on related information that is of previous successful fallback of the terminal device and that is included in the DB 2, and there is a high possibility that the terminal device searches the DB 2 to find an appropriate LTE neighboring cell.

It should be noted that the DB 2 includes a correspondence between a target LTE frequency point indicated by the network side for redirection in each historical fallback process, a frequency point corresponding to an NR cell camped on before this time of fallback, and a frequency point corresponding to an LTE cell camped on after this time of fallback succeeds. In some embodiments of this application, the DB 2 may include several records (that is, historical fallback records). Each record may include a target LTE frequency point indicated by the network side in one historical fallback process, a frequency point corresponding to an NR cell camped on before this time of fallback, and a frequency point corresponding to an LTE cell camped on after this time of fallback succeeds. In this case, each record may represent a correspondence between a target LTE frequency point indicated by the network side in one historical fallback process, a frequency point corresponding to an NR cell camped on before this time of fallback, and a frequency point corresponding to an LTE cell camped on after this time of fallback.

In some embodiments of this application, in addition to the target LTE frequency point indicated by the network side for redirection, the frequency point corresponding to the NR cell camped on before fallback, and the frequency point corresponding to the LTE cell camped on after fallback succeeds in the process of historical fallback to LTE, the DB 2 may further include a cell ID corresponding to the NR cell camped on before fallback and a signal strength (for example, an RSRP value) of the LTE cell camped on after fallback succeeds. In this case, the DB 2 includes a correspondence between a target LTE frequency point indicated by the network side for redirection in a historical fallback process, a frequency point corresponding to an NR cell camped on before this time of fallback, a cell ID corresponding to the NR cell camped on before this time of fallback, and a frequency point corresponding to an LTE cell camped on after this time of fallback succeeds. In some embodiments of this application, the DB 2 includes several records. Each record may include a target LTE frequency point indicated by the network side for redirection in one historical fallback process, a frequency point corresponding to an NR cell camped on before this time of fallback, a cell ID corresponding to the NR cell camped on before this time of fallback, and a frequency point corresponding to an LTE cell camped on after this time of fallback succeeds. In this case, each record may represent a correspondence between a target LTE frequency point indicated by the network side for redirection in one historical fallback process, a frequency point corresponding to an NR cell camped on before this time of fallback, a cell ID corresponding to the NR cell camped on before this time of fallback, and a frequency point corresponding to an LTE cell camped on after this time of fallback succeeds.

In some embodiments of this application, based on the content recorded in the DB 2 described above, the DB 2 may further include a cell ID corresponding to the camped LTE cell after fallback succeeds in the historical fallback process. Similarly, the DB 2 may include a correspondence between the cell ID corresponding to the LTE cell camped on after fallback succeeds in each historical fallback process and other content of this time of fallback (for example, the target LTE frequency point indicated by the network side for redirection, the frequency point corresponding to the NR cell camped on before fallback, and the frequency point corresponding to the LTE cell camped on after fallback succeeds that are mentioned above). In some embodiments of this application, each record in the DB 2 may include a cell ID corresponding to an LTE cell camped on after fallback succeeds in one historical fallback process.

In some embodiments of this application, the DB 2 may further include a signal strength (for example, an RSRP value) of the LTE cell camped on after fallback succeeds in the historical fallback process. In some other embodiments of this application, the DB 2 may further include other information (for example, a bandwidth, and whether the cell is an anchor cell) about the LTE cell camped on after fallback succeeds in the historical fallback process. In some other embodiments of this application, the DB 2 may further include a score and/or a score level of the LTE cell camped on after fallback succeeds in the historical fallback process. It may be understood that, for a manner of obtaining the score and the score level, reference may be made to the following related descriptions. This is not described herein.

For example, as shown in Table 1, the DB 2 includes information about three historical fallback processes of the terminal device. In one historical fallback process, a frequency point corresponding to an NR cell camped on by the terminal device before fallback is 627264, a PCI corresponding to the NR cell camped on by the terminal device before fallback is 285, a target LTE frequency point indicated by the network side for redirection is 1825, a frequency point corresponding to an LTE cell camped on after fallback succeeds is 300, a PCI corresponding to the LTE cell camped on after fallback succeeds is 601, and a score level corresponding to the LTE cell camped on after fallback succeeds is excellent. In another historical fallback process, a frequency point corresponding to an NR cell camped on by the terminal device before fallback is 633984, a PCI corresponding to the NR cell camped on by the terminal device before fallback is 385, a target LTE frequency point indicated by the network side for redirection is 1650, a frequency point corresponding to an LTE cell camped on after fallback succeeds is 100, a PCI corresponding to the LTE cell camped on after fallback succeeds is 501, and a score level corresponding to the LTE cell camped on after fallback succeeds is good. In another historical fallback process, a frequency point corresponding to an NR cell camped on by the terminal device before fallback is 633984, a PCI corresponding to the NR cell camped on by the terminal device before fallback is 485, a target LTE frequency point indicated by the network side for redirection is 38725, a frequency point corresponding to an LTE cell camped on after fallback succeeds is 1825, a PCI corresponding to the LTE cell camped on after fallback succeeds is 401, and a score level corresponding to the LTE cell camped on after fallback succeeds is poor.

**Table 1**

| Frequency point corresponding to an NR cell camped on before fallback | PCI corresponding to the NR cell camped on before fallback | Target LTE frequency point indicated by the network side for redirection | Frequency point corresponding to an LTE cell camped on after fallback succeeds | PCI corresponding to the LTE cell camped on after fallback succeeds | Score level corresponding to the LTE cell camped on after fallback succeeds |
|---|---|---|---|---|---|
| 627264 | 285 | 1825 | 300 | 601 | Excellent (excellent) |
| 633984 | 385 | 1650 | 100 | 501 | Good (good) |
| 633984 | 485 | 38725 | 1825 | 401 | Poor (poor) |

In some embodiments of this application, the DB 1 and the DB 2 are lists. It may be understood that the DB 1 and the DB 2 may alternatively be represented in another form other than the list. This is not limited in this application. It should be noted that the DB 1 and the DB 2 are merely example names, and should not be construed as a limitation to this application.

In some embodiments of this application, that the terminal device performs searching on the LTE frequency point set_1 based on a preset sequence_1 may specifically include: The terminal device selects s1 LTE frequency points in the LTE frequency point set_1; and sequentially determines, in descending order of energy, whether LTE cells corresponding to the s1 LTE frequency points are appropriate LTE cells. If an appropriate LTE cell is not found, the terminal device may reselect s2 LTE frequency points other than the s1 LTE frequency points in the LTE frequency point set_1, and sequentially determine, in descending order of energy, whether LTE cells corresponding to the s2 LTE frequency points are appropriate LTE cells. Similarly, if an appropriate LTE cell is still not found, the terminal device may reselect s3 LTE frequency points other than the s1 LTE frequency points and the s2 LTE frequency points in the LTE frequency point set_1, and sequentially determine, in descending order of energy, whether LTE cells corresponding to the s3 LTE frequency points are appropriate LTE cells. By analogy, the terminal device may search the LTE frequency point set_1 according to the foregoing method, until an appropriate LTE cell is found, or it is determined that LTE cells corresponding to all LTE frequency points in the LTE frequency point set_1 are not appropriate LTE cells, or the timer T2 times out, or a procedure of this time of fallback from 5G to 4G times out (for example, a timer started by the terminal device or the network side for this time of fallback times out).

It should be noted that that the terminal device sequentially determines, in descending order of energy, whether LTE cells corresponding to the s1 LTE frequency points are appropriate LTE cells may include: The terminal device sorts the s1 LTE frequency points in descending order of energy. The terminal device first determines whether there is an appropriate LTE cell in one or more LTE cells corresponding to an LTE frequency point whose energy is ranked r^{th} in the s1 LTE frequency points. If there is an appropriate LTE cell, the terminal device stops searching. If the one or more LTE cells corresponding to the LTE frequency point whose energy is ranked r^{th} in the s1 LTE frequency points are not appropriate LTE cells, the terminal device continues to determine whether there is an appropriate LTE cell in one or more LTE cells corresponding to an LTE frequency point whose energy is ranked (r+1)^{th} in the s1 LTE frequency points. r=1, ..., s1.

Specifically, the terminal device sorts the s1 LTE frequency points in descending order of energy. The terminal device first determines whether there is an appropriate LTE cell in one or more LTE cells corresponding to an LTE frequency point whose energy is ranked first in the s1 LTE frequency points. If there is an appropriate LTE cell, the terminal device determines that an appropriate LTE cell is found, and stops searching. If the one or more LTE cells corresponding to the LTE frequency point whose energy is ranked first in the s1 LTE frequency points are not appropriate LTE cells, the terminal device continues to determine whether there is an appropriate LTE cell in one or more LTE cells corresponding to an LTE frequency point whose energy is ranked second in the s1 LTE frequency points. By analogy, if the terminal device determines that there is no appropriate LTE cell in one or more LTE cells corresponding to an LTE frequency point whose energy is ranked s1^{th} in the s1 LTE frequency points, the terminal device does not find an appropriate LTE cell based on the s1 LTE frequency points.

It may be understood that, for specific processes in which the terminal device searches for an appropriate LTE cell on the s2 LTE frequency points and the s3 LTE frequency points, reference may be made to the foregoing process of searching for an appropriate LTE cell on the s1 LTE frequency points.

It may be understood that s1, s2, and s3 are positive integers, and specific values thereof may be set according to an actual requirement. This is not limited in this application.

It may be understood that the terminal device may select an LTE frequency point in the LTE frequency point set_1 based on one or more pieces of information such as signal strengths and bandwidths of LTE cells corresponding to LTE frequency points in the DB 1 and the ACQ DB, whether the LTE cells are anchor cells, and whether the LTE cells are high-speed rail cells.

It should be noted that that the terminal device determines whether an LTE cell corresponding to an LTE frequency point is an appropriate LTE cell may also be understood as that the terminal device determines whether there is an appropriate LTE cell on the LTE frequency point.

It may be understood that, the energy of the LTE frequency point mentioned in this application refers to an RSSI of a specific bandwidth (for example, an RSSI per 100 kilohertz). The RSSI is a linear average value of powers of all signals (including useful co-channel signals, co-channel interference, adjacent-channel interference, thermal noise, and the like) received by the terminal device, and reflects a load strength on a resource.

In some embodiments of this application, the LTE frequency point set_1 may include the DB 1 and the ACQ DB. That the terminal device performs searching on the LTE frequency point set_1 based on a preset sequence_1 may specifically include: The terminal device may sort the LTE frequency points in the DB 1 and the ACQ DB according to one or more pieces of information such as signal strengths and bandwidths of LTE cells corresponding to the LTE frequency points in the DB 1 and the ACQ DB, whether the LTE cells are anchor cells, and whether the LTE cells are high-speed rail cells; select top s1 LTE frequency points; and sequentially determine, in descending order of energy, whether LTE cells corresponding to the s1 LTE frequency points are appropriate LTE cells. If an appropriate LTE cell is not found, the terminal device may reselect top s2 LTE frequency points other than the s1 LTE frequency points in an LTE frequency point set_1, and sequentially determine, in descending order of energy, whether LTE cells corresponding to the s2 LTE frequency points are appropriate LTE cells. Similarly, if an appropriate LTE cell is still not found, the terminal device may reselect top s3 LTE frequency points other than the s1 LTE frequency points and the s2 LTE frequency points in the LTE frequency point set_1, and sequentially determine, in descending order of energy, whether LTE cells corresponding to the s3 LTE frequency points are appropriate LTE cells. By analogy, the terminal device may search the DB 1 and the ACQ DB according to the foregoing method, until an appropriate LTE cell is found, or it is determined that LTE cells corresponding to all LTE frequency points in the DB 1 and the ACQ DB are not appropriate LTE cells, or the timer T2 times out, or a procedure of this time of fallback from 5G to 4G times out (for example, a timer started by the terminal device or a network side for this time of fallback times out).

In some embodiments of this application, the LTE frequency point set_1 may include the DB 1, the ACQ DB, and an LTE frequency point of another source (for example, some or all LTE frequency points in the prefer band, and some or all LTE frequency points in the full band). That the terminal device performs searching on the LTE frequency point set_1 based on a preset sequence_1 may specifically include: The terminal device may first perform searching on LTE frequency points in the DB 1 and the ACQ DB. If LTE cells corresponding to the LTE frequency points in the DB 1 and the ACQ DB are not appropriate LTE cells, the terminal device may continue to perform searching on the LTE frequency point of the another source. It may be understood that, for a manner in which the terminal device performs searching on the LTE frequency points in the DB 1 and the ACQ DB, reference may be made to the foregoing descriptions, and details are not described herein again.

In a possible implementation, the terminal device selects a fixed quantity of LTE frequency points from the LTE frequency point set_1 each time, unless a quantity of unselected LTE frequency points in the LTE frequency point set_1 is less than the fixed quantity. For example, if a quantity of times that the terminal device selects a fixed quantity of LTE frequency points from the LTE frequency point set_1 is not less than three, s1=s2=s3. For example, if a total quantity of times that the terminal device selects an LTE frequency point from the LTE frequency point set_1 is three, and a quantity of times that the terminal device selects a fixed quantity of LTE frequency points from the LTE frequency point set_1 is two, s1=s2>s3. For example, if a total quantity of times that the terminal device selects an LTE frequency point from the LTE frequency point set_1 is two, and a quantity of times that the terminal device selects a fixed quantity of LTE frequency points from the LTE frequency point set_1 is also two, s1=s2. It may be understood that the fixed quantity may be set according to an actual requirement. This is not limited in this application. For example, the fixed quantity may be 10.

For a frequency point of any source included in the LTE frequency point set_1, when the frequency point of any source specifically includes a plurality of frequency points, the preset sequence_1 may specifically include a sequence in which the terminal device performs searching on the plurality of frequency points. It may be understood that the sequence in which the terminal device performs searching on the plurality of frequency points may be related to factors such as signal strengths and bandwidths of the plurality of frequency points, whether corresponding cells are anchor cells, and whether the frequency points belong to the prefer band. For specific descriptions, refer to the following descriptions. Details are not described herein.

For example, when the LTE frequency point set_1 includes the frequency points in the DB 1, that the terminal device performs searching on the frequency point in the LTE frequency point set_1 based on the preset sequence_1 may specifically include: The terminal device may perform searching on the frequency points in the DB 1 in descending order of corresponding signal strengths. In this case, the frequency points in the DB 1 are sorted in descending order of the corresponding signal strengths, and an obtained sequence is the preset sequence_1.

It may be understood that when the LTE frequency point set_1 includes frequency points of a plurality of sources, the preset sequence_1 may specifically include a sequence in which the terminal device performs searching on frequency points that are of different sources and that are included in the LTE frequency point set_1.

For example, when the LTE frequency point set_1 includes some or all LTE frequency points in the DB 1, the ACQ DB, some or all LTE frequency points in the full band, and some or all LTE frequency points in the prefer band, that the terminal device performs searching on a frequency point other than the target LTE frequency point based on the preset sequence_1 may specifically include: The terminal device may first perform searching on some or all LTE frequency points in the DB 1 in descending order of corresponding signal strengths. If an appropriate LTE cell is not found, the terminal device then sequentially performs searching on the ACQ DB, some or all LTE frequency points in the prefer band, and some or all LTE frequency points in the full band.

For example, when the LTE frequency point set_1 includes some or all LTE frequency points in the DB 1, some or all LTE frequency points in the DB 2, some or all LTE frequency points in the ACQ DB, an LTE frequency point in the full band, and an LTE frequency point in the prefer band, that the terminal device performs searching on the frequency point in the LTE frequency point set_1 based on the preset sequence_1 may specifically include: The terminal device may first perform searching on some or all LTE frequency points in the DB 1 and some or all LTE frequency points in the DB 2. If an appropriate LTE cell is not found, the terminal device then sequentially performs searching on some or all LTE frequency points in the ACQ DB, some or all LTE frequency points in the prefer band, and some or all LTE frequency points in the full band. In a possible implementation, that the terminal device may first perform searching on some or all LTE frequency points in the DB 1 and some or all LTE frequency points in the DB 2 may specifically include: The terminal device may first perform searching on some or all LTE frequency points in the DB 1, and then perform searching on some or all LTE frequency points in the DB 2. In a possible implementation, that the terminal device may first perform searching on some or all LTE frequency points in the DB 1 and some or all LTE frequency points in the DB 2 may specifically include: The terminal device may first perform searching on some or all LTE frequency points in the DB 2, and then perform searching on some or all LTE frequency points in the DB 1. In a possible implementation, that the terminal device may first perform searching on some or all LTE frequency points in the DB 1 and some or all LTE frequency points in the DB 2 may specifically include: The terminal device may perform searching on LTE frequency points in the DB 1 and the DB 2 in descending order of corresponding signal strengths.

It may be understood that that the terminal device performs searching on some or all LTE frequency points in the DB 2 may specifically include: The terminal device may search some or all of the historical fallback records in the DB 2, and determine whether there is an NR cell in which the terminal device camps before the fallback is an NR cell in which the terminal device camps before the current fallback, and the redirected target LTE frequency point indicated by the network side is a historical fallback record of the redirected target LTE frequency point indicated by the network side for this time of fallback. If there is the historical fallback record, the terminal device may search for a appropriate LTE cell based on an LTE frequency point corresponding to an LTE cell in which the terminal device camps after the successful fallback in the historical fallback record.

It should be noted that, in some embodiments of this application, when performing searching on frequency points in the DB 2, the terminal device may first perform searching on a frequency point at a top position in the DB 2, and then perform searching on another frequency point in the DB 2. In other words, the terminal device may first determine whether an NR cell camped on by the terminal device before fallback in a historical fallback record at the top position is the NR cell camped on by the terminal device before this time of fallback, and determine whether an LTE frequency point indicated by the network side for redirection in the historical fallback record at the top position is the target LTE frequency point indicated by the network side for this time of fallback. When the foregoing two items are completely the same, the terminal device may search for an appropriate LTE cell based on an LTE frequency point corresponding to an LTE cell camped on by the terminal device after fallback succeeds in the historical fallback record at the top position. When the foregoing two items are not completely the same, the terminal device further perform searching based on another historical fallback record in the DB 2 according to the foregoing method. It may be understood that the LTE frequency point at the top position in the DB 2 may be an LTE frequency point stored by the terminal device for a specific position. The specific position may include a home or an office place. In some embodiments of this application, the terminal device may self-learn of the LTE frequency point corresponding to the specific position based on network camping duration through a modem (Modem). In some other embodiments of this application, the terminal device may configure the LTE frequency point corresponding to the specific position based on network camping duration through an AP side, or a user autonomously sets the LTE frequency point corresponding to the specific position.

It may be understood that the DB 1 and the DB 2 use a first-in-first-out principle. In other words, when a quantity of LTE frequency points stored in the DB 1 reaches an upper limit, the terminal device clears an earliest stored LTE frequency point to store a new LTE frequency point. Similarly, when a quantity of LTE frequency points stored in the DB 2 reaches an upper limit, the terminal device also clears an earliest stored LTE frequency point to store a new LTE frequency point. However, different from the DB 1, the LTE frequency point at the top position in the DB 2 and other information related to the frequency point (for example, a cell ID of a corresponding cell, an RSRP of the corresponding cell, a corresponding fallback frequency point, and a corresponding NR cell camped on before fallback) are not cleared.

In some embodiments of this application, one or more of the DB 1, the DB 2, the ACQ DB, the full band, and the prefer band may include the target LTE frequency point.

It should be noted that, in some embodiments of this application, the LTE frequency point set_1 may further include the target LTE frequency point. In a possible implementation, one or more of the DB 1, the DB 2, the ACQ DB, the full band, and the prefer band that are included in the LTE frequency point set_1 may include the target LTE frequency point. In another possible implementation, in addition to including one or more of the DB 1, the DB 2, the ACQ DB, the full band, and the prefer band, the LTE frequency point set_1 may further include the target LTE frequency point.

S5: If the terminal device finds an appropriate LTE cell when the timer T2 does not time out, the terminal device camps on the appropriate LTE cell; and if the terminal device still does not find an appropriate LTE cell when the timer T2 times out, the terminal device selects an NR cell for access.

If the terminal device finds an appropriate LTE cell when the timer T2 does not time out, the terminal device may camp on the appropriate LTE cell, establish an RRC connection to the appropriate LTE cell, and trigger a TAU procedure. If the terminal device still does not find an appropriate LTE cell when the timer T2 times out, the terminal device may select an NR cell for access, that is, choose to camp on the NR cell, and establish an RRC connection to the NR cell.

It may be understood that, NR cells on which the terminal device camps/accesses mentioned in step S1 and step S5 may be a same NR cell, or may be different NR cells.

In some embodiments of this application, the terminal device may start the timer T2 in response to receiving the RRC release message that is sent by the NR and that carries the redirection indication, searches the DB 2 for the LTE frequency point that matches (or corresponds to) the target LTE frequency point indicated by the network side for redirection and the frequency point corresponding to the currently camped NR cell, and searches for an appropriate LTE cell on the LTE frequency point, that is, determines whether a cell corresponding to the LTE frequency point is an appropriate LTE cell. If there is no LTE frequency point, in the DB 2, that matches the target LTE frequency point and the frequency point corresponding to the currently camped NR cell, or there is an LTE frequency point, in the DB 2, that matches the target LTE frequency point and the frequency point corresponding to the currently camped NR cell but a cell corresponding to the LTE frequency point is not an appropriate LTE cell, the terminal device may start the timer T1, and perform step S3 to step S5. In this case, frequency points, other than the target LTE frequency point, on which the terminal device performs searching when performing step S4 do not include the frequency points in the DB 2.

In some embodiments of this application, the terminal device may search, in response to receiving the RRC release message that is sent by the NR and that carries the redirection indication, the DB 2 for an LTE frequency point that matches the target LTE frequency point indicated by the network side for redirection and the frequency point corresponding to the currently camped NR cell; and when there is no LTE frequency point, in the DB 2, that matches the target LTE frequency point and the frequency point corresponding to the currently camped NR cell, or there is an LTE frequency point, in the DB 2, that matches the target LTE frequency point and the frequency point corresponding to the currently camped NR cell but a cell corresponding to the LTE frequency point is not an appropriate LTE cell, start the timer T1 and the timer T2, and perform step S3 to step S5.

In some embodiments of this application, the DB 2 may include a cell ID corresponding to an LTE cell camped on after fallback succeeds in a historical fallback process. In this case, if the terminal device finds, in the DB 2 based on the foregoing manner, an LTE frequency point that matches the target LTE frequency point indicated by the network side for redirection and the frequency point corresponding to the currently camped NR cell, the terminal device may find a cell ID of an LTE cell corresponding to the LTE frequency point. Then, the terminal device may perform searching on the LTE frequency point based on the cell ID, that is, the terminal device may search the LTE frequency point for an LTE cell whose corresponding cell ID is the found cell ID, and determine whether the LTE cell is an appropriate LTE cell.

According to the foregoing descriptions, in some embodiments of this application, the DB 2 may include several records. For example, as shown in Table 1, each row of data in Table 1 is a record of one historical fallback process. Each record may include a target LTE frequency point indicated by the network side for redirection in one historical fallback process, a frequency point corresponding to an NR cell camped on before this time of fallback, and a frequency point corresponding to an LTE cell camped on after this time of fallback succeeds. After the fallback procedure is triggered, the terminal device may not only determine the frequency point corresponding to the currently camped NR cell, but also determine the target LTE frequency point indicated by the network side for redirection for this time of fallback after receiving the RRC release message that is sent by the NR and that carries the redirection indication. In some embodiments of this application, that the terminal device searches the DB 2 for an LTE frequency point that matches the target LTE frequency point indicated by the network side for redirection and the frequency point corresponding to the currently camped NR cell may specifically include: The terminal device may perform comparison on each record in the DB 2 based on the determined target LTE frequency point and the frequency point corresponding to the currently camped NR cell, to check whether there is a record, in the DB 2, in which a target LTE frequency point indicated by the network side for redirection in a historical fallback process and a frequency point corresponding to an NR cell camped on before this time of fallback are respectively the same as the determined target LTE frequency point and the frequency point corresponding to the currently camped NR cell. If there is a record, in the DB 2, in which a target LTE frequency point indicated by the network side for redirection in a historical fallback process and a frequency point corresponding to an NR cell camped on before this time of fallback are respectively the same as the determined target LTE frequency point and the frequency point corresponding to the currently camped NR cell, there is an LTE frequency point, in the DB 2, that matches the target LTE frequency point indicated by the network side for redirection and the frequency point corresponding to the currently camped NR cell.

According to the foregoing descriptions, an appropriate LTE cell may be an LTE cell whose signal quality meets an access threshold and to which access of the terminal device is not forbidden by the network side. It should be noted that, in a possible implementation, the terminal device increases the access threshold when performing step S3, that is, an LTE cell corresponding to the target LTE frequency point given by the network side for redirection needs to meet a higher access threshold to be an appropriate LTE cell, and an access threshold used in a process in which the terminal device searches for a cell on a frequency point after the timer T1 times out is lower than the foregoing increased access threshold. In other words, specific meanings of appropriate LTE cells mentioned in step S3 and step S5 may be different. An access threshold corresponding to the appropriate LTE cell mentioned in step S5 may be lower than an access threshold corresponding to the appropriate LTE cell mentioned in step S3.

It should be noted that, in some embodiments of this application, if the terminal device still does not find an appropriate LTE cell based on the target LTE frequency point indicated by the network side for redirection until the timer T1 times out, in a subsequent process, the terminal device may determine again whether the LTE cell corresponding to the target LTE frequency point is an appropriate LTE cell. In a possible implementation, the terminal device may search for an appropriate LTE cell based on the target LTE frequency point again. In another possible implementation, the terminal device may determine, based on content obtained when the target LTE frequency point is previously used for searching, whether the LTE cell corresponding to the target LTE frequency point is an appropriate LTE cell.

For example, when the terminal device performs step S4, the ACQ DB used by the terminal device for searching may include the target LTE frequency point. In this case, the terminal device may not only perform searching on a frequency point other than the target LTE frequency point in the ACQ DB, but also perform searching on the target LTE frequency point.

For example, if the terminal device does not find an appropriate LTE cell on the another frequency point after the timer T1 times out, but finds an appropriate LTE cell in a process of performing searching on the target LTE frequency point again because the access threshold is low, the terminal device may access the LTE cell.

**The following describes a specific implementation of the foregoing embodiment.**

FIG. 7A is a flowchart of another communication method according to an embodiment of this application. The communication method may include, but is not limited to, the following steps:
S101: A terminal device camps on an NR cell.

The terminal device may camp on the NR cell. In other words, the terminal device may camp on a cell covered by a 5G network. In some embodiments of this application, the terminal device may perform a voice service when camping on the NR cell.

S102: An NR sends LTE frequency point information to the terminal device.

It may be understood that the NR may send the LTE frequency point information to the terminal device. The LTE frequency point information may include a frequency point corresponding to an inter-frequency LTE cell (that is, an inter-frequency LTE neighboring cell) in a neighboring cell (which is referred to as a neighboring cell for short below) of the cell on which the terminal device currently camps. It may be understood that a frequency point corresponding to an LTE cell may also be referred to as an LTE frequency point. It may be understood that related information of the inter-frequency LTE cell may further include other information such as a cell ID corresponding to the inter-frequency LTE cell. The cell ID may refer to a physical cell identifier (Physical Cell Identifier, PCI).

In some embodiments of this application, the LTE frequency point information may be configured by using an RRC connection reconfiguration (RRC Connection Reconfiguration) message carrying a measurement configuration. The measurement configuration includes an LTE frequency point that needs to be measured by the terminal device and that is indicated by a network side.

In some embodiments of this application, the LTE frequency point information may be configured by using a system message (for example, a SIB5 message). The SIB5 message is a system message. The SIB5 message includes frequency information of an inter-frequency E-UTRA neighboring cell (that is, the frequency point corresponding to the inter-frequency LTE neighboring cell).

It may be understood that the frequency point mentioned in this application may refer to a frequency point number. There is a correspondence between a frequency point and a frequency.

Correspondingly, the terminal device may receive the LTE frequency point information sent by the NR.

S103: The terminal device performs measurement and/or detection based on the LTE frequency point information, to obtain a measurement detection result.

After receiving the LTE frequency point information sent by the NR, the terminal device may perform measurement and/or detection based on related information (for example, a signal strength, a bandwidth, whether the LTE cell is an anchor cell, or whether the LTE cell is a high-speed rail cell) of the LTE cell (that is, the LTE neighboring cell of the currently camped NR cell) corresponding to the LTE frequency point included in the LTE frequency point information, to obtain the measurement detection result.

For example, the terminal device may measure the signal strength of the LTE cell corresponding to the LTE frequency point included in the LTE frequency point information. For example, the terminal device may detect the bandwidth of the LTE cell corresponding to the LTE frequency point included in the LTE frequency point information, and may further detect whether the LTE cell corresponding to the LTE frequency point included in the LTE frequency point information is an anchor cell. It may be understood that the terminal device may specifically perform the foregoing detection process by receiving a system message. For example, the bandwidth of the LTE cell corresponding to the LTE frequency point included in the LTE frequency point information and whether the LTE cell is an anchor cell are determined based on content in the received system message.

It may be understood that the measurement detection result may include one or more of the following: the signal strength of the LTE neighboring cell, the bandwidth of the LTE neighboring cell, whether an anchor cell exists in the LTE neighboring cell, and whether a high-speed rail cell exists in the LTE neighboring cell. It may be understood that the measurement detection result may further include other information. This is not limited in this application.

It may be understood that the signal strength may be specifically represented by using one or more of parameters such as an RSRP, an RSRQ, and an SNR. For example, the terminal device may measure an RSRP of the LTE neighboring cell, to obtain a specific value of an RSRP corresponding to each LTE neighboring cell. For another example, the terminal device may measure an RSRQ of the LTE neighboring cell, to obtain a specific value of an RSRQ corresponding to each LTE neighboring cell.

S104: The terminal device sorts measured LTE frequency points based on the measurement detection result, and stores the measured LTE frequency points into a DB 1 based on a sorting result.

After measuring signal strengths of LTE neighboring cells and obtaining the measurement detection result, the terminal device may sort the LTE frequency points corresponding to the LTE neighboring cells based on the measurement detection result, to obtain the sorting result, and store the sorting result and related information of the measured LTE frequency points into the DB 1. According to the foregoing descriptions, the DB 1 includes a frequency point corresponding to an LTE neighboring cell of an NR cell on which the terminal device has camped (including the currently camped NR cell).

In some embodiments of this application, the DB 1 may be a list. It may be understood that the terminal device may alternatively store the measured LTE frequency points in another form such as an array. This is not limited in this application.

In some embodiments of this application, the terminal device may further store other related information (for example, corresponding cell IDs, signal strengths of the corresponding cells, and bandwidths of the corresponding cells) of the measured LTE frequency points into the DB 1.

It should be noted that in some embodiments of this application, for one LTE frequency point, the terminal device may find a plurality of cells. In this case, that the terminal device sorts measured LTE frequency points based on the measurement detection result may specifically include: The terminal device sorts the cells corresponding to the measured LTE frequency points based on the measurement detection result, and sorts the measured LTE frequency points based on a sorting result of the cells. It may be understood that because there is a correspondence between the LTE neighboring cells of the NR cell on which the terminal device currently camps and the LTE frequency points, when one LTE frequency point corresponds to a plurality of LTE neighboring cells, the terminal device may determine, based on the sorting result obtained by sorting the LTE neighboring cells, a sorting result of the LTE frequency points corresponding to the LTE neighboring cells, that is, determine a sorting result of the measured LTE frequency points. Specifically, for an LTE frequency point that corresponds to a plurality of LTE neighboring cells, the terminal device may perform sorting on the LTE frequency point based on a sequence number of a top-ranked cell corresponding to the LTE frequency point.

In some embodiments of this application, that the terminal device sorts the LTE frequency points corresponding to the LTE neighboring cells based on the measurement detection result may specifically include: The terminal device sorts the LTE frequency points corresponding to the LTE neighboring cells in descending order of signal strengths of the LTE neighboring cells.

For example, the terminal device measures three LTE frequency points: 100, 1300, and 1650. Specifically, the terminal device may search for a cell corresponding to the LTE frequency point 100. There is one found cell corresponding to the LTE frequency point 100, where a cell ID corresponding to the cell is PCI1. Similarly, the terminal device may search for a cell corresponding to the LTE frequency point 1300 and a cell corresponding to the LTE frequency point 1650. There is one cell that corresponds to the LTE frequency point 1300 and that is found by the terminal device, where a cell ID corresponding to the cell is PCI2, and there is one cell that corresponds to the LTE frequency point 1650 and that is found by the terminal device, and a cell ID corresponding to the cell is PCI3. The terminal device may measure signal strengths of cells whose cell IDs are PCI1, PCI2, and PCI3. According to a measurement detection result, an RSRP of the cell whose cell ID is PCI1 is -95 decibel-milliwatts (dBm), an RSRP of the cell whose cell ID is PCI2 is -112 dBm, and an RSRP of the cell whose cell ID is PCI3 is -115 dBm. The terminal device may sort the LTE frequency points corresponding to the three cells in descending order of RSRPs of the three cells. Specifically, because -95 dBm>-112 dBm>-115 dBm, the LTE frequency point 100 of the cell corresponding to -95 dBm is ranked first, the LTE frequency point 100 of the cell corresponding to -112 dBm is ranked second, and the LTE frequency point 100 of the cell corresponding to -115 dBm is ranked third. In other words, a sorting result obtained after the terminal device sorts the LTE frequency points is: 100, 1300, 1650. It may be understood that, in a possible implementation, the terminal device may store the three LTE frequency points into the DB 1 based on the sorting result obtained by sorting the LTE frequency points, which is specifically shown in the first two columns of Table 2. In another possible implementation, the terminal device may not only store the three LTE frequency points into the DB 1 based on the sorting result obtained by sorting the LTE frequency points, but also store other related information (for example, cell IDs of the corresponding cells, and the RSRPs of the corresponding cells) of the three LTE frequency points into the DB 1, which is specifically shown in Table 2.

**Table 2**

| Sequence number | LTE frequency point | Cell ID | RSRP (dBm) |
|---|---|---|---|
| 1 | 100 | PCI1 | -95 |
| 3 | 1300 | PCI2 | -112 |
| 4 | 1650 | PCI3 | -115 |

It may be understood that, when the LTE frequency points measured by the terminal device include an LTE frequency point that corresponds to a plurality of cells, that the terminal device sorts the LTE frequency points corresponding to the LTE neighboring cells based on the measurement detection result may specifically include: The terminal device sorts the LTE neighboring cells in descending order of signal strengths of the LTE neighboring cells, and sorts the corresponding LTE frequency points based on a sorting result of the LTE neighboring cells.

For example, the terminal device measures three LTE frequency points: 100, 1300, and 1650. Specifically, the terminal device may search for a cell corresponding to the LTE frequency point 100. There are two found cells corresponding to the LTE frequency point 100, where cell IDs corresponding to the cells are separately PCI1 and PCI2. Similarly, the terminal device may search for a cell corresponding to the LTE frequency point 1300 and a cell corresponding to the LTE frequency point 1650. There is one cell that corresponds to the LTE frequency point 1300 and that is found by the terminal device, where a cell ID corresponding to the cell is PCI3, and there is one cell that corresponds to the LTE frequency point 1650 and that is found by the terminal device, and a cell ID corresponding to the cell is PCI4. The terminal device may measure signal strengths of cells whose cell IDs are PCI1, PCI2, PCI3, and PCI4. According to a measurement detection result, an RSRP of the cell whose cell ID is PCI1 is -95 dBm, an RSRP of the cell whose cell ID is PCI2 is -110 dBm, an RSRP of the cell whose cell ID is PCI3 is -112 dBm, and an RSRP of the cell whose cell ID is PCI4 is -115 dBm. The terminal device may sort the LTE frequency points corresponding to the four cells in descending order of RSRPs of the four cells. Specifically, because -95 dBm>-110 dBm>-112 dBm>-115 dBm, the cell corresponding to -95 dBm is ranked first, and an LTE frequency point corresponding to the cell is 100; the cell corresponding to -110 dBm is ranked second, and an LTE frequency point corresponding to the cell is 100; the cell corresponding to -112 dBm is ranked third, and an LTE frequency point corresponding to the cell is 1300; and the cell corresponding to -115 dBm is ranked fourth, and an LTE frequency point corresponding to the cell is 1650. It may be understood that a sorting result obtained after the terminal device sorts the LTE frequency points is: 100, 1300, 1650. A sorting result obtained after the terminal device sorts the cells corresponding to the LTE frequency points is: the cell whose cell ID is PCI1, the cell whose cell ID is PCI2, the cell whose cell ID is PCI3, and the cell whose cell ID is PCI4. In other words, a sequence number corresponding to the cell whose cell ID is PCI1 is 1, a sequence number corresponding to the cell whose cell ID is PCI2 is 2, a sequence number corresponding to the cell whose cell ID is PCI3 is 3, and a sequence number corresponding to the cell whose cell ID is PCI4 is 4. It may be understood that the terminal device may sort the measured LTE frequency points based on the sorting result. Specifically, because the LTE frequency point 100 corresponds to two cells, the terminal device performs sorting on the LTE frequency point 100 based on a sequence number of a top-ranked cell corresponding to the LTE frequency point. In other words, the terminal device performs sorting on the LTE frequency point 100 based on the sequence number of the cell whose cell ID is PCI1, and it may be obtained that a sequence number corresponding to the LTE frequency point 100 is 1. Because an LTE frequency point corresponding to a cell that is ranked right after the two cells corresponding to the LTE frequency point 100 is 1300, a sequence number corresponding to the LTE frequency point 1300 is 2. Because an LTE frequency point corresponding to a cell that is ranked right after the cell corresponding to the LTE frequency point 1300 is 1650, a sequence number corresponding to the LTE frequency point 1650 is 3. It may be understood that a sorting result obtained after the terminal device sorts the LTE frequency points is: 100, 1300, 1650. It may be understood that, in a possible implementation, the terminal device may store the three LTE frequency points into the DB 1 based on the sorting result obtained by sorting the LTE frequency points. In another possible implementation, the terminal device may not only store the three LTE frequency points into the DB 1 based on the sorting result obtained by sorting the LTE frequency points, but also store other related information (for example, cell IDs of the corresponding cells, and the RSRPs of the corresponding cells) of the three LTE frequency points into the DB 1, which is specifically shown in Table 3.

**Table 3**

| Sequence number | LTE frequency point | Cell ID | RSRP (dBm) |
|---|---|---|---|
| 1 | 100 | PCI1 | -95 |
| 2 | 100 | PCI2 | -110 |
| 3 | 1300 | PCI3 | -112 |
| 4 | 1650 | PCI4 | -115 |

It should be noted that in some embodiments of this application, before storing the measured LTE frequency points and the corresponding signal strengths (for example, RSRP values) into the DB 1, the terminal device may determine whether the signal strengths corresponding to the measured LTE frequency points meet a specific condition. For example, the terminal device may determine whether RSRPs corresponding to the measured LTE frequency points are greater than a threshold_1. It may be understood that the threshold_1 may be set according to an actual requirement. This is not limited in this application. For example, the threshold_1 may be -115 dBm.

In some embodiments of this application, that the terminal device sorts the LTE frequency points corresponding to the LTE neighboring cells based on the measurement detection result may specifically include: The terminal device sorts the LTE frequency points corresponding to the inter-frequency LTE neighboring cells in descending order of bandwidths of the LTE neighboring cells.

For example, the terminal device measures three LTE frequency points: 100, 1300, and 1650. Specifically, the terminal device may search for cells corresponding to the three LTE frequency points, and measure bandwidths of the cells corresponding to the three LTE frequency points. It may be understood that the terminal device may further measure other information (for example, signal strengths) of the cells corresponding to the three LTE frequency points. The LTE frequency point 100 corresponds to one cell, and a cell ID of the cell is PCI2; the LTE frequency point 1300 corresponds to one cell, and a cell ID of the cell is PCI3; and the LTE frequency point 1650 corresponds to one cell, and a cell ID of the cell is PCI4. According to a measurement detection result, a bandwidth of the cell whose cell ID is PCI2 is 20 Megahertz (M or MHz), and an RSRP of the cell is -100 dBm; a bandwidth of the cell whose cell ID is PCI3 is 10 M, and an RSRP of the cell is -105 dBm; and a bandwidth of the cell whose cell ID is PCI4 is 15 M, and an RSRP of the cell is -115 dBm. The terminal device may sort the LTE frequency points corresponding to the three cells in descending order of bandwidths of the three cells. Specifically, because 20 M>15 M>10 M, an LTE frequency point corresponding to the cell having the bandwidth of 20 M is ranked first, that is, the LTE frequency point 100 is ranked first; an LTE frequency point corresponding to the cell having the bandwidth of 15 M is ranked second, that is, the LTE frequency point 1650 is ranked second; and an LTE frequency point corresponding to the cell having the bandwidth of 10 M is ranked third, that is, the LTE frequency point 1300 is ranked third. In other words, a sorting result obtained after the terminal device sorts the LTE frequency points is: 100, 1650, 1300. It may be understood that, in a possible implementation, the terminal device may store the three LTE frequency points into the DB 1 based on the sorting result obtained by sorting the LTE frequency points, which is specifically shown in the first column and the third column of Table 4. In another possible implementation, the terminal device may not only store the three LTE frequency points into the DB 1 based on the sorting result obtained by sorting the LTE frequency points, but also store other related information (for example, the bandwidths of the corresponding cells, cell IDs of the corresponding cells, and RSRPs of the corresponding cells) of the three LTE frequency points into the DB 1, which is specifically shown in Table 4.

**Table 4**

| Sequence number | Bandwidth (M) | LTE frequency point | Cell ID | RSRP (dBm) |
|---|---|---|---|---|
| 1 | 20 | 100 | PCI2 | -100 |
| 2 | 15 | 1650 | PCI4 | -115 |
| 3 | 10 | 1300 | PCI3 | -105 |

It may be understood that, when the LTE frequency points measured by the terminal device include an LTE frequency point that corresponds to a plurality of cells, that the terminal device sorts the LTE frequency points corresponding to the LTE neighboring cells based on the measurement detection result may specifically include: The terminal device sorts the LTE neighboring cells in descending order of bandwidths of the LTE neighboring cells, and sorts the corresponding LTE frequency points based on a sorting result of the LTE neighboring cells.

For example, the terminal device measures three LTE frequency points: 100, 1300, and 1650. Specifically, the terminal device may search for cells corresponding to the three LTE frequency points, and measure bandwidths of the cells corresponding to the three LTE frequency points. It may be understood that the terminal device may further measure other information (for example, signal strengths) of the cells corresponding to the three LTE frequency points. The LTE frequency point 100 corresponds to two cells, and cell IDs of the cells are PCI1 and PCI2; the LTE frequency point 1300 corresponds to one cell, and a cell ID of the cell is PCI3; and the LTE frequency point 1650 corresponds to one cell, and a cell ID of the cell is PCI4. According to a measurement detection result, a bandwidth of the cell whose cell ID is PCI1 is 5 M, and an RSRP of the cell is -95 dBm; a bandwidth of the cell whose cell ID is PCI2 is 20 M, and an RSRP of the cell is -100 dBm; a bandwidth of the cell whose cell ID is PCI3 is 10 M, and an RSRP of the cell is -105 dBm; and a bandwidth of the cell whose cell ID is PCI4 is 15 M, and an RSRP of the cell is -115 dBm. The terminal device may sort the four cells in descending order of bandwidths of the four cells. A sorting result obtained after the terminal device sorts the cells corresponding to the LTE frequency points is: the cell whose cell ID is PCI2, the cell whose cell ID is PCI4, the cell whose cell ID is PCI3, and the cell whose cell ID is PCI1. In other words, a sequence number corresponding to the cell whose cell ID is PCI2 is 1, a sequence number corresponding to the cell whose cell ID is PCI4 is 2, a sequence number corresponding to the cell whose cell ID is PCI3 is 3, and a sequence number corresponding to the cell whose cell ID is PCI1 is 4. It may be understood that the terminal device may sort the measured LTE frequency points based on the sorting result. Specifically, because the LTE frequency point 100 corresponds to two cells, the terminal device performs sorting on the LTE frequency point 100 based on a sequence number of a top-ranked cell corresponding to the LTE frequency point. In other words, the terminal device performs sorting on the LTE frequency point 100 based on the sequence number of the cell whose cell ID is PCI2, and it may be obtained that a sequence number corresponding to the LTE frequency point 100 is 1. Because an LTE frequency point corresponding to a cell that is ranked right after the cell whose cell ID is PCI2 is 1650, a sequence number corresponding to the LTE frequency point 1650 is 2. Because an LTE frequency point corresponding to a cell that is ranked right after the cell corresponding to the LTE frequency point 1650 is 1300, a sequence number corresponding to the LTE frequency point 1300 is 3. It may be understood that a sorting result obtained after the terminal device sorts the LTE frequency points is: 100, 1650, 1300. It may be understood that, in a possible implementation, the terminal device may store the three LTE frequency points into the DB 1 based on the sorting result obtained by sorting the LTE frequency points. In another possible implementation, the terminal device may not only store the three LTE frequency points into the DB 1 based on the sorting result obtained by sorting the LTE frequency points, but also store other related information (for example, cell IDs of the corresponding cells, and the RSRPs of the corresponding cells) of the three LTE frequency points into the DB 1, which is specifically shown in Table 5.

**Table 5**

| Sequence number | Bandwidth (M) | LTE frequency point | Cell ID | RSRP (dBm) |
|---|---|---|---|---|
| 1 | 20 | 100 | PCI2 | -100 |
| 2 | 15 | 1650 | PCI4 | -115 |
| 3 | 10 | 1300 | PCI3 | -105 |
| 4 | 5 | 100 | PCI1 | -95 |

In some embodiments of this application, the terminal device may sort the LTE frequency points corresponding to the LTE neighboring cells based on the signal strengths and the bandwidths of the LTE neighboring cells. In other words, the terminal device may sort the LTE frequency points corresponding to the LTE neighboring cells by comprehensively considering the signal strengths and the bandwidths of the inter-frequency LTE neighboring cells. A sorting rule is as follows: An LTE frequency point corresponding to a cell with a high signal strength and a large bandwidth is ranked high, and an LTE frequency point corresponding to a cell with a low signal strength and a small bandwidth is ranked low.

For example, the terminal device measures three LTE frequency points: 100, 1300, and 1650. Specifically, the terminal device may search for cells corresponding to the three LTE frequency points, and measure bandwidths and signal strengths of the cells corresponding to the three LTE frequency points. The LTE frequency point 100 corresponds to two cells, and cell IDs of the cells are PCI1 and PCI2; the LTE frequency point 1300 corresponds to one cell, and a cell ID of the cell is PCI3; and the LTE frequency point 1650 corresponds to one cell, and a cell ID of the cell is PCI4. According to a measurement detection result, a bandwidth of the cell whose cell ID is PCI1 is 5 M, and an RSRP of the cell is -95 dBm; a bandwidth of the cell whose cell ID is PCI2 is 20 M, and an RSRP of the cell is -100 dBm; a bandwidth of the cell whose cell ID is PCI3 is 10 M, and an RSRP of the cell is -105 dBm; and a bandwidth of the cell whose cell ID is PCI4 is 15 M, and an RSRP of the cell is -115 dBm. The terminal device may sort the four cells with reference to bandwidths and signal strengths of the four cells. As shown in Table 6, a sequence number corresponding to the cell whose cell ID is PCI2 is 1, a sequence number corresponding to the cell whose cell ID is PCI4 is 2, a sequence number corresponding to the cell whose cell ID is PCI3 is 3, and a sequence number corresponding to the cell whose cell ID is PCI1 is 4. It may be understood that the terminal device may sort the measured LTE frequency points based on the sorting result. Specifically, because the LTE frequency point 100 corresponds to two cells, the terminal device performs sorting on the LTE frequency point 100 based on a sequence number of a top-ranked cell corresponding to the LTE frequency point. In other words, the terminal device performs sorting on the LTE frequency point 100 based on the sequence number of the cell whose cell ID is PCI2, and it may be obtained that a sequence number corresponding to the LTE frequency point 100 is 1. Because an LTE frequency point corresponding to a cell that is ranked right after the cell whose cell ID is PCI2 is 1300, a sequence number corresponding to the LTE frequency point 1300 is 2. Because an LTE frequency point corresponding to a cell that is ranked right after the cell corresponding to the LTE frequency point 1300 is 1650, a sequence number corresponding to the LTE frequency point 1300 is 3. It may be understood that a sorting result obtained after the terminal device sorts the LTE frequency points is: 100, 1650, 1300. It may be understood that, in a possible implementation, the terminal device may store the three LTE frequency points into the DB 1 based on the sorting result obtained by sorting the LTE frequency points. In another possible implementation, the terminal device may store related information of the three LTE frequency points into the DB 1 based on the sorting result obtained by sorting the LTE frequency points, which is specifically shown in Table 6.

**Table 6**

| Sequence number | Bandwidth (M) | LTE frequency point | Cell ID | RSRP (dBm) |
|---|---|---|---|---|
| 1 | 20 | 100 | PCI2 | -100 |
| 2 | 10 | 1300 | PCI3 | -105 |
| 3 | 5 | 100 | PCI1 | -95 |
| 4 | 15 | 1650 | PCI4 | -115 |

In a possible implementation, that the terminal device sorts the LTE frequency points corresponding to the inter-frequency LTE neighboring cells based on the measurement detection result may specifically include: The terminal device sorts the LTE neighboring cells in descending order of the signal strengths of the LTE neighboring cells, to obtain a sorting result_1. The terminal device sorts the LTE neighboring cells in descending order of the bandwidths of inter-frequency LTE neighboring cells, to obtain a sorting result_2. Weighting is performed on the sorting result_1 and the sorting result_2, and sorting is performed in ascending order of weighted results, to obtain a sorting result_3. It may be understood that the sorting result_3 is a final sorting result of sorting the inter-frequency LTE neighboring cells. It should be noted that the terminal device may sort the corresponding LTE frequency points based on the sorting result_3. For a specific implementation, refer to the foregoing descriptions. Details are not described herein again.

For ease of description, in this application, an LTE neighboring cell is recorded as a cell N, a sorting sequence number of a signal strength of the cell N is denoted as num1, and a sorting sequence number of a bandwidth of the cell N is denoted as num2. It may be understood that the terminal device may weight the sorting sequence number of the signal strength of the cell N and the sorting sequence number of the bandwidth of the cell N, to obtain a weighted sorting sequence number: num1*a1+num2*a2. The terminal device may determine a weighted sorting sequence number corresponding to each LTE neighboring cell in this manner, and perform sorting in ascending order of weighted sorting sequence numbers, to obtain the final sorting result. a1 is a weighting coefficient corresponding to the signal strength of the cell N, and a2 is a weighting coefficient corresponding to the bandwidth of the cell N. It may be understood that specific values of a1 and a2 may be set according to an actual requirement. This is not limited in this application. For example, a1 may be 0.5, and a2 may also be 0.5.

In some embodiments of this application, based on the foregoing sorting method, the terminal device may further sort the LTE frequency points corresponding to the LTE neighboring cells with reference to information about whether the LTE neighboring cells are anchor cells. It may be understood that the anchor cell refers to a cell that can access both LTE and NR through dual connectivity.

In a possible implementation, when there is only one anchor cell in the LTE neighboring cells, the terminal device may rank an LTE frequency point corresponding to the anchor cell first. For other inter-frequency LTE neighboring cells, the terminal device sorts LTE frequency points corresponding to the other LTE neighboring cells based on the foregoing method. When there are a plurality of anchor cells in the LTE neighboring cells, the terminal device may first sort LTE frequency points corresponding to the plurality of anchor cells based on the foregoing method, and then sort other LTE neighboring cells based on the foregoing method.

Similarly, in some embodiments of this application, based on the foregoing sorting method, the terminal device may further sort the LTE frequency points corresponding to the LTE neighboring cells with reference to information about whether the LTE neighboring cells are high-speed rail cells. It may be understood that the high-speed rail cell refers to a cell marked for a special scenario of high-speed rail.

In some embodiments of this application, based on the foregoing sorting method, the terminal device may further sort the LTE frequency points corresponding to the LTE neighboring cells with reference to information about whether the LTE frequency points corresponding to the LTE cells belong to a prefer band. It may be understood that, the prefer band is a frequency band to which a frequency point of a cell to which the terminal device preferentially accesses belongs.

In a possible implementation, if there is a frequency point belonging to the prefer band in the LTE frequency points corresponding to the inter-frequency LTE neighboring cells, the terminal device may rank the frequency point first. For LTE frequency points corresponding to other inter-frequency LTE neighboring cells, the terminal device may sort the LTE frequency points based on the foregoing method. When there are a plurality of LTE frequency points belonging to the prefer band, the terminal device may first sort the plurality of LTE frequency points belonging to the prefer band based on the foregoing method, and then sort other LTE frequency points based on the foregoing method.

It may be understood that the terminal device may alternatively sort the measured LTE frequency points according to another method. This is not limited in this application.

In some embodiments of this application, that the terminal device stores the measured LTE frequency points into the DB 1 based on the sorting result may specifically include: The terminal device may store the corresponding LTE frequency points into the DB 1 in ascending order of sequence numbers of the measured LTE frequency points in the sorting result. In this case, when viewing the LTE frequency points in the DB 1, the terminal device may determine a sequence in which the terminal device stores the LTE frequency points into the DB 1, so that the terminal device may perform searching on these LTE frequency points according to the sequence in which the terminal device stores the LTE frequency points into the DB 1.

In some embodiments of this application, that the terminal device stores the measured LTE frequency points into the DB 1 based on the sorting result may specifically include: The terminal device may store the sorting result and related information of the measured LTE frequency points into the DB 1. Specifically, the terminal device may store the measured LTE frequency points and sequence numbers of the measured LTE frequency points in the sorting result into the DB 1. For details of this part of content, refer to Table 2 and Table 4. For example, as shown in Table 2, the terminal device may store the LTE frequency points in Table 2 and sequence numbers corresponding to the LTE frequency points into the DB 1.

The terminal device may further score (or evaluate) the measured LTE frequency points, and store the measured LTE frequency points and scores and/or score levels corresponding to the measured LTE frequency points into the DB 1, so that when the frequency points in the DB 1 are searched subsequently, the corresponding frequency points may be searched in descending order of the corresponding scores. It may be understood that for a specific implementation of scoring, reference may be made to the foregoing sorting method and related technical documents, and details are not described herein.

S105: When an EPS fallback procedure is triggered, the NR notifies a core network that the EPS fallback procedure has been initiated.

When the EPS fallback procedure is triggered, the NR may notify the core network that the EPS fallback procedure has been initiated. It may be understood that a scenario of triggering the EPS fallback procedure may be a scenario of an incoming call or an outgoing call. For a specific implementation of triggering the EPS fallback procedure, refer to related descriptions of FIG. 5 and related technical documents. Details are not described herein.

In some embodiments of this application, if a signal of the NR cell on which the terminal device currently camps is poor, the network side may also trigger the fallback procedure.

S106: When the EPS fallback procedure is triggered, the NR sends, to the terminal device, an instruction to redirect to a frequency point A.

When the EPS fallback procedure is triggered, the NR may send, to the terminal device, the instruction to redirect to the frequency point A. The instruction to redirect to the frequency point A may be an RRC release message, and the RRC release message may include the frequency point A. It may be understood that the frequency point A is a target LTE frequency point indicated by the network side for redirection in a current fallback process.

Correspondingly, the terminal device may receive the instruction that is sent by the NR and that is to redirect to the frequency point A.

S107: The terminal device starts a timer T1 and a timer T2.

After receiving the instruction that is sent by the NR and that is to redirect to the frequency point A, the terminal device may start the timer T1 and the timer T2.

It may be understood that, for related descriptions of the timer T1 and the timer T2, reference may be made to the foregoing descriptions, and details are not described herein again.

S108: The terminal device performs cell searching based on the frequency point A.

The terminal device may perform cell searching based on the frequency point A, that is, search for an appropriate LTE cell whose corresponding frequency point is the frequency point A. If the terminal device finds an appropriate LTE cell on the frequency point A, the terminal device may attempt to access the LTE cell. It may be understood that, for related descriptions of the appropriate LTE cell, reference may be made to the foregoing descriptions, and details are not described herein again.

S109: If an appropriate LTE cell is still not found until the timer T1 times out, the terminal device performs searching on the LTE frequency points in the DB 1 and/or LTE frequency points in a DB 2 according to a preset sequence_1.

If the terminal device still does not find an appropriate LTE cell on the frequency point A until the timer T1 times out, the terminal device may perform searching on the LTE frequency points in the DB 1 and/or the LTE frequency points in the DB 2 according to the preset sequence_1.

According to the foregoing descriptions, the DB 1 may include other related information (for example, a bandwidth, an RSRP, and a cell ID) of the LTE neighboring cell of the NR cell on which the terminal device currently camps. The DB 2 includes a target LTE frequency point indicated by the network side for redirection, a frequency point corresponding to an NR cell camped on before fallback, and a frequency point corresponding to an LTE cell camped on after fallback succeeds in each of one or more processes of historical fallback to LTE. In other words, the DB 2 stores a frequency point corresponding to an LTE cell camped on by the terminal device after previous fallback succeeds, a target LTE frequency point given by the network side for redirection in a process of the successful fallback, and a frequency point corresponding to an NR cell camped on before fallback.

In some embodiments of this application, the DB 2 may further include other related information (for example, a bandwidth, an RSRP, and a cell ID) of the LTE cell camped on after fallback succeeds in the process of historical fallback to LTE. This is not limited in this application.

In some embodiments of this application, if no LTE frequency point is stored at a top position in the DB 2, the terminal device may sort the LTE frequency points in the DB 2 according to the sorting method mentioned in step S104. If an LTE frequency point is stored at the top position in the DB 2, the terminal device may sort LTE frequency points other than the LTE frequency point at the top position in the DB 2 according to the sorting method mentioned in step S104.

In some embodiments of this application, if the terminal device still does not find an appropriate LTE cell on the frequency point A until the timer T1 times out, the terminal device may perform searching on the LTE frequency points in the DB 1 according to the preset sequence_1. In a possible implementation, the preset sequence_1 may be a default sequence of the DB 1. It may be understood that the default sequence of the DB 1 refers to a sequence obtained after the terminal device sorts the measured LTE frequency points based on the measurement detection result, that is, a sequence represented by the sorting result obtained after the terminal device sorts the measured LTE frequency points. In another possible implementation, that the terminal device may perform searching on the frequency points in the DB 1 according to a preset sequence_1 may specifically include: The terminal device may select top y LTE frequency points in the DB 1, and perform searching on the y LTE frequency points according to the sequence. In another possible implementation, that the terminal device may perform searching on the frequency points in the DB 1 according to a preset sequence_1 may specifically include: The terminal device may select top y LTE frequency points in the DB 1, measure energy of the y LTE frequency points, resort the y LTE frequency points in descending order of energy, and perform searching on the y LTE frequency points according to a sequence obtained after resorting, that is, search for a cell on the y LTE frequency points according to the sequence obtained after resorting. In this case, the preset sequence_1 is a sequence obtained after the y LTE frequency points are resorted. It may be understood that for a resorting manner, reference may be made to the foregoing descriptions, and details are not described herein again.

In some embodiments of this application, if the terminal device still does not find an appropriate LTE cell on the frequency point A until the timer T1 times out, the terminal device may perform searching on the LTE frequency points in the DB 2 according to the preset sequence_1. Specifically, the terminal device may first perform searching on an LTE frequency point at a top position in the DB 2, and then sequentially perform searching based on a sorting result of LTE frequency points other than the LTE frequency point at the top position.

In some embodiments of this application, if the terminal device still does not find an appropriate LTE cell on the frequency point A until the timer T1 times out, the terminal device may perform searching on the LTE frequency points in the DB 1 and the LTE frequency points in the DB 2 according to the preset sequence_1. In a possible implementation, that the terminal device may perform searching on the LTE frequency points in the DB 1 and the LTE frequency points in the DB 2 according to the preset sequence_1 may specifically include: The terminal device first performs searching on the LTE frequency points in the DB 1 according to a default sequence of the DB 1, then performs searching on an LTE frequency point at a top position in the DB 2, and finally sequentially performs searching based on a sorting result of LTE frequency points other than the LTE frequency point at the top position in the DB 2. In a possible implementation, that the terminal device may perform searching on the LTE frequency points in the DB 1 and the LTE frequency points in the DB 2 according to the preset sequence_1 may specifically include: The terminal device first performs searching on an LTE frequency point at a top position in the DB 2, then sequentially performs searching based on a sorting result of LTE frequency points other than the LTE frequency point at the top position in the DB 2, and finally performs searching on the LTE frequency points in the DB 1 according to a default sequence of the DB 1. In a possible implementation, that the terminal device may perform searching on the LTE frequency points in the DB 1 and the LTE frequency points in the DB 2 according to the preset sequence_1 may specifically include: The terminal device resorts the LTE frequency points in the DB 1 and the LTE frequency points in the DB 2, and sequentially performs searching on corresponding LTE frequency points based on a sorting result. It may be understood that for a specific sorting method, reference may be made to the foregoing descriptions (for example, step S104), and details are not described in this application.

It may be understood that that the terminal device performs searching on the frequency points in the DB 1 and/or the frequency points in the DB 2 may specifically include: The terminal device performs searching on the frequency points in the DB 1 and/or the frequency points in the DB 2 to determine whether there is an appropriate LTE cell. If the terminal device finds an appropriate LTE cell on the frequency points in the DB 1 and/or the frequency points in the DB 2, the terminal device may attempt to access the LTE cell.

In some embodiments of this application, compared with an access threshold used by the terminal device when the terminal device searches for an appropriate LTE cell on the frequency points in the DB 1 and/or the frequency points in the DB 2, an access threshold used by the terminal device when the terminal device searches for an appropriate LTE cell on the frequency point A is higher. In this manner, the terminal device can be prevented from camping on to a cell with a weak signal, to avoid a problem of subsequent access difficulty caused by the weak signal of the camped cell, thereby shortening access time of the terminal device to some extent.

S110: If an appropriate LTE cell is not found after searching is performed on the frequency points in the DB 1 and/or the frequency points in the DB 2, the terminal device attempts to perform searching on an LTE frequency point in an LTE frequency point set_2.

If the terminal device does not find an appropriate LTE cell after performing searching on the frequency points in the DB 1 and/or the frequency points in the DB 2, the terminal device may attempt to perform searching on the LTE frequency point in the LTE frequency point set_2 until the timer T2 times out or an appropriate LTE cell is found. It may be understood that, the LTE frequency point set_2 includes at least one LTE frequency point different from the frequency points used for searching in this time of fallback. In some embodiments of this application, the LTE frequency point set_2 may include some or all LTE frequency points in an ACQ DB. In some other embodiments of this application, the LTE frequency point set_2 may include some or all LTE frequency points in a full band. In some other embodiments of this application, the LTE frequency point set_2 may include some or all LTE frequency points in a prefer band.

It may be understood that this application does not limit a sequence in which the terminal device performs searching on LTE frequency points in the LTE frequency point set_2. In some embodiments of this application, that the terminal device attempts to perform searching on the LTE frequency point in the LTE frequency point set_2 may specifically include: The terminal device may first perform searching on some or all LTE frequency points in the ACQ DB, then perform searching on some or all LTE frequency points in the prefer band, and finally perform searching on some or all LTE frequency points in the full band.

It may be understood that, in some embodiments of this application, the LTE frequency point set_1 may include all LTE frequency points in the LTE frequency point set_2.

S111: If the terminal device still does not find an appropriate LTE cell when the timer T2 times out, searching performed on the LTE frequency point in the LTE frequency point set_2 is completed, or the EPS fallback procedure times out, the terminal device selects an NR cell for access.

If the terminal device still does not find an appropriate cell when the timer T2 times out, the terminal device does not attempt to perform searching on the LTE frequency point in the LTE frequency point set_2, and selects an NR cell for access.

It may be understood that, if the timer T2 times out, searching performed on the LTE frequency point in the LTE frequency point set_2 is completed, an appropriate LTE cell is found, or the EPS fallback procedure times out, the terminal device no longer attempts to perform searching in a network, that is, no longer attempts to search for an appropriate LTE cell, and selects an NR cell for access. It may be understood that timeout of the EPS fallback procedure refers to timeout of a timer that is specified in a protocol and that is started when the EPS fallback procedure is triggered. It may be understood that, the timer that is specified in the protocol and that is started when the EPS fallback procedure is triggered may include a timer (for example, a timer_1) set by the terminal device, and may further include a timer (for example, a timer_2) set by the network side.

It may be understood that, the NR cell that the terminal device selects for access when performing step S111 may be the same as or different from the NR cell on which the terminal device originally camps (that is, the NR cell on which the terminal device camps when performing step S101).

S112: If an appropriate LTE cell is found when the timer T2 does not time out, the terminal device initiates RRC access and TAU procedures, camps on the found appropriate LTE cell, and stores, into the DB 2, a frequency point corresponding to the NR cell camped on before fallback, the frequency point A, and a frequency point corresponding to the currently camped LTE cell.

If the terminal device finds an appropriate LTE cell in the process of frequency point-based searching (for example, step S108 to step S110), the terminal device initiates the RRC access and TAU procedures, and camps on the found appropriate LTE cell. It may be understood that for related descriptions of the RRC access and TAU procedures, reference may be made to related technical documents, and details are not described herein.

After fallback succeeds, the terminal device may further store, into the DB 2, the frequency point corresponding to the NR cell camped on before fallback, the target LTE frequency point (that is, the frequency point A) indicated by the network side for redirection for this time of fallback, and the frequency point corresponding to the currently camped LTE cell. The currently camped LTE cell may be understood as an LTE cell camped on after this time of fallback. It may be understood that, the terminal device may store, into the DB 2, a correspondence between the frequency point corresponding to the NR cell camped on before fallback, the target LTE frequency point (that is, the frequency point A) indicated by the network side for redirection for this time of fallback, and the frequency point corresponding to the currently camped LTE cell. In some embodiments of this application, a record may be used in the DB 2 to represent the correspondence that is between the frequency point corresponding to the NR cell camped on before fallback, the target LTE frequency point (that is, the frequency point A) indicated by the network side for redirection for this time of fallback, and the frequency point corresponding to the currently camped LTE cell and that is stored by the terminal device for this time of fallback. It may be understood that, one record may occupy one number.

In some embodiments of this application, the terminal device may further store other related information (for example, a bandwidth, an RSRP, or a cell ID) of the currently camped LTE cell into the DB 2.

It should be noted that, in some embodiments of this application, after performing step S103, the terminal device may store the measured LTE frequency points and related information of the measured LTE frequency points into the DB 1 without sorting the measured LTE frequency points. Specifically, after performing step S101 to step S103, the terminal device may store the measured LTE frequency points and related information of the LTE frequency points included in the measurement detection result into the DB 1, and then perform step S105 to step S108.

In some embodiments of this application, after performing step S108, if an appropriate LTE cell is still not found until the timer T1 times out, the terminal device may perform searching on the LTE frequency points in the DB 1 according to the preset sequence_1, and perform step S110 to step S112. That the terminal device may perform searching on the LTE frequency points in the DB 1 according to the preset sequence_1 may specifically include: The terminal device may sort the LTE frequency points in the DB 1, and perform searching on the LTE frequency points in the DB 1 according to a sequence obtained after sorting.

In some embodiments of this application, after performing step S108, if an appropriate LTE cell is still not found until the timer T1 times out, the terminal device may perform searching on the LTE frequency points in the DB 1 and the LTE frequency points in the DB 2 according to the preset sequence_1, and perform step S110 to step S112.

In a possible implementation, that the terminal device may perform searching on the LTE frequency points in the DB 1 and the LTE frequency points in the DB 2 according to the preset sequence_1 may specifically include: The terminal device may first sort the LTE frequency points in the DB 1, and perform searching on the LTE frequency points in the DB 1 according to a sequence obtained through sorting; then perform searching on the LTE frequency point at the top position in the DB 2; and finally sort the LTE frequency points other than the LTE frequency point at the top position in the DB 2, and perform searching according to a sequence obtained through sorting.

In a possible implementation, that the terminal device may perform searching on the LTE frequency points in the DB 1 and the LTE frequency points in the DB 2 according to the preset sequence_1 may specifically include: The terminal device first performs searching on the LTE frequency point at the top position in the DB 2, finally sorts the LTE frequency points other than the LTE frequency point at the top position in the DB 2, and performs searching according to a sequence obtained through sorting; and then sorts the LTE frequency points in the DB 1, and performs searching on the LTE frequency points in the DB 1 according to a sequence obtained through sorting.

In a possible implementation, that the terminal device may perform searching on the LTE frequency points in the DB 1 and the LTE frequency points in the DB 2 according to the preset sequence_1 may specifically include: The terminal device resorts the LTE frequency points in the DB 1 and the LTE frequency points in the DB 2, and sequentially performs searching on corresponding LTE frequency points based on a sorting result.

It may be understood that for a specific sorting method, reference may be made to the foregoing descriptions (for example, step S104), and details are not described in this application.

According to the foregoing descriptions, an appropriate LTE cell may be an LTE cell whose signal quality meets an access threshold and to which access of the terminal device is not forbidden by the network side. It should be noted that, in some embodiments of this application, an access threshold met for searching for an appropriate LTE cell by the terminal device based on the frequency point A when the timer T1 starts and does not time out is higher than an access threshold met for searching for an appropriate LTE cell based on frequency points in the DB 1, the DB 2, and/or the LTE frequency point set_2 after the timer T1 times out.

**The following describes another specific implementation of the foregoing embodiment.**

FIG. 7B is a flowchart of another communication method according to an embodiment of this application. The communication method may include, but is not limited to, the following steps:

S201: A terminal device camps on an NR cell.

S202: An NR sends LTE frequency point information to the terminal device.

S203: The terminal device performs measurement and/or detection based on the LTE frequency point information, to obtain a measurement detection result.

S204: The terminal device sorts measured LTE frequency points based on the measurement detection result, and stores the measured LTE frequency points into a DB 1 based on a sorting result.

S205: When an EPS fallback procedure is triggered, the NR notifies a core network that the EPS fallback procedure has been initiated.

S206: When the EPS fallback procedure is triggered, the NR sends, to the terminal device, an instruction to redirect to a frequency point A.

S207: The terminal device starts a timer T1 and a timer T2.

S208: The terminal device performs cell searching based on the frequency point A.

It may be understood that, for specific implementations of step S201 to step S208, reference may be made to related descriptions of step S101 to step S108, and details are not described herein again.

S209: If an appropriate LTE cell is still not found until the timer T1 times out, the terminal device performs searching on LTE frequency points in the DB 1 and an ACQ DB.

In some embodiments of this application, based on the foregoing descriptions, that the terminal device performs searching on LTE frequency points in the DB 1 and an ACQ DB may specifically include: The terminal device may sort the LTE frequency points in the DB 1 and the ACQ DB according to one or more pieces of information such as signal strengths and bandwidths of LTE cells corresponding to the LTE frequency points in the DB 1 and the ACQ DB, whether the LTE cells are anchor cells, and whether the LTE cells are high-speed rail cells; select top s1 LTE frequency points; and sequentially determine, in descending order of energy, whether LTE cells corresponding to the s1 LTE frequency points are appropriate LTE cells. If an appropriate LTE cell is not found, the terminal device may reselect top s2 LTE frequency points other than the s1 LTE frequency points in an LTE frequency point set_1, and sequentially determine, in descending order of energy, whether LTE cells corresponding to the s2 LTE frequency points are appropriate LTE cells. Similarly, if an appropriate LTE cell is still not found, the terminal device may reselect top s3 LTE frequency points other than the s1 LTE frequency points and the s2 LTE frequency points in the LTE frequency point set_1, and sequentially determine, in descending order of energy, whether LTE cells corresponding to the s3 LTE frequency points are appropriate LTE cells. By analogy, the terminal device may search the DB 1 and the ACQ DB according to the foregoing method, until an appropriate LTE cell is found, or it is determined that LTE cells corresponding to all LTE frequency points in the DB 1 and the ACQ DB are not appropriate LTE cells, or the timer T2 times out, or a procedure of this time of fallback from 5G to 4G times out (for example, a timer started by the terminal device or a network side for this time of fallback times out).

In some embodiments of this application, the terminal device may sequentially determine, in descending order of energy, whether LTE cells corresponding to the LTE frequency points in the DB 1 and the ACQ DB are appropriate LTE cells.

S210: If an appropriate LTE cell is not found after searching is performed on the frequency points in the DB 1 and the ACQ DB, the terminal device attempts to perform searching on an LTE frequency point in an LTE frequency point set_3.

In some embodiments of this application, the LTE frequency point set_3 may include at least one of the following: some or all LTE frequency points in a DB 2, some or all LTE frequency points in a full band, and some or all LTE frequency points in a prefer band.

It may be understood that, in some embodiments of this application, the LTE frequency point set_1 may include all LTE frequency points in the LTE frequency point set_3. LTE frequency points in an LTE frequency point set_2 and the LTE frequency points in the LTE frequency point set_3 may be partially the same or different.

S211: If the terminal device still does not find an appropriate LTE cell when the timer T2 times out, searching performed on the LTE frequency point in the LTE frequency point set_3 is completed, or the EPS fallback procedure times out, the terminal device selects an NR cell for access.

S212: If an appropriate LTE cell is found when the timer T2 does not time out, the terminal device initiates RRC access and TAU procedures, camps on the found appropriate LTE cell, and stores, into the DB 2, a frequency point corresponding to the NR cell camped on before fallback, the frequency point A, and a frequency point corresponding to the currently camped LTE cell.

It may be understood that, for specific implementations of step S211 and step S212, reference may be made to related descriptions of step S111 and step S112, and details are not described herein again.

In some embodiments of this application, the LTE frequency point set_1 includes only the DB 1 and the ACQ DB. In this case, the terminal device may not perform step S210.

**The following describes another communication method according to an embodiment of this application.**

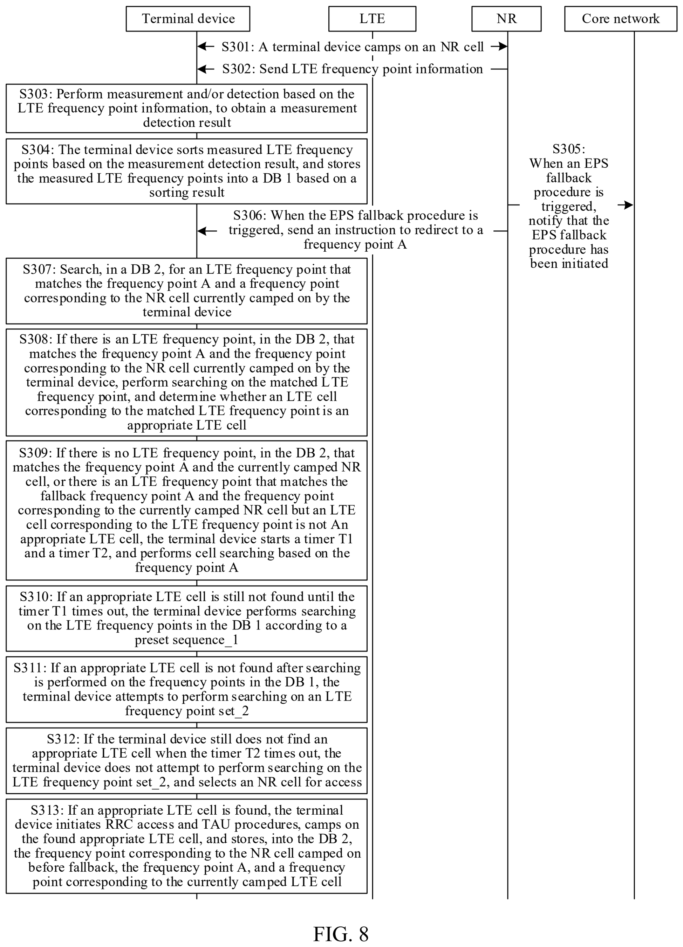

FIG. 8 is a flowchart of another communication method according to an embodiment of this application. The communication method may include, but is not limited to, the following steps:
S301: A terminal device camps on an NR cell.
S302: An NR sends LTE frequency point information to the terminal device.
S303: The terminal device performs measurement and/or detection based on the LTE frequency point information, to obtain a measurement detection result.
S304: The terminal device sorts measured LTE frequency points based on the measurement detection result, and stores the measured LTE frequency points into a DB 1 based on a sorting result.
S305: When an EPS fallback procedure is triggered, the NR notifies a core network that the EPS fallback procedure has been initiated.
S306: When the EPS fallback procedure is triggered, the NR sends, to the terminal device, an instruction to redirect to a frequency point A.

It may be understood that, for specific implementations of step S301 to step S306, reference may be made to related descriptions of step S101 to step S106, and details are not described herein again.

S307: The terminal device searches, in a DB 2, for an LTE frequency point that matches the frequency point A and a frequency point corresponding to an NR cell currently camped on by the terminal device.

It may be understood that the DB 2 may include a target LTE frequency point indicated by a network side for redirection, a frequency point corresponding to an NR cell camped on before fallback, and a frequency point corresponding to an LTE cell camped on after fallback succeeds in each of one or more processes of historical fallback to an LTE. The terminal device may search, in the DB 2, for a historical fallback process in which a target LTE frequency point indicated by the network side for redirection is the frequency point A, and a frequency point corresponding to an NR cell camped on by the terminal device before this time of historical fallback is the frequency point corresponding to the NR cell currently camped on by the terminal device. If there is a historical fallback process, in the DB 2, in which a target LTE frequency point indicated by the network side for redirection and a frequency point corresponding to an NR cell camped on by the terminal device before this time of historical fallback are respectively the same as the frequency point A and the frequency point corresponding to the NR cell currently camped on by the terminal device, the terminal device may determine that in the DB 2, a frequency point corresponding to an LTE cell camped on by the terminal device after this time of historical fallback process succeeds is an LTE frequency point matching the frequency point A and the NR cell currently camped on by the terminal device. Otherwise, the terminal device determines that in the DB 2, there is no LTE frequency point matching the frequency point A and the frequency point corresponding to the NR cell currently camped on by the terminal device.

In some embodiments of this application, the terminal device may further search the DB 2 for a cell ID of an LTE cell matching the fallback frequency point A and the frequency point corresponding to the currently camped NR cell.

S308: If there is an LTE frequency point, in the DB 2, that matches the frequency point A and the frequency point corresponding to the NR cell currently camped on by the terminal device, perform searching on the matched LTE frequency point, and determine whether an LTE cell corresponding to the matched LTE frequency point is an appropriate LTE cell.

If there is an LTE frequency point, in the DB 2, that matches the frequency point A and the frequency point corresponding to the currently camped NR cell, the terminal device may search for an LTE cell corresponding to the LTE frequency point, and determine whether the corresponding LTE cell is an appropriate LTE cell.

S309: If there is no LTE frequency point, in the DB 2, that matches the frequency point A and the currently camped NR cell, or there is an LTE frequency point, in the DB 2, that matches the fallback frequency point A and the frequency point corresponding to the currently camped NR cell but an LTE cell corresponding to the LTE frequency point is not an appropriate LTE cell, the terminal device starts a timer T1 and a timer T2, and perform cell searching based on the frequency point A.

If there is no LTE frequency point, in the DB 2, that matches the fallback frequency point A and the currently camped NR cell, the terminal device may start the timer T1 and the timer T2, and perform cell searching based on the frequency point A. If there is an LTE frequency point, in the DB 2, that matches the fallback frequency point A and the frequency point corresponding to the currently camped NR cell but an LTE cell corresponding to the LTE frequency point is not an appropriate LTE cell, the terminal device may start the timer T1 and the timer T2, and perform cell searching based on the frequency point A.

It may be understood that for related descriptions of performing cell searching by the terminal device based on the frequency point A, reference may be made to the foregoing descriptions, and details are not described herein again.

S310: If an appropriate LTE cell is still not found until the timer T1 times out, the terminal device performs searching on the LTE frequency points in the DB 1 according to a preset sequence_1.

In a possible implementation, the preset sequence_1 may be a default sequence of the DB 1. It may be understood that the default sequence of the DB 1 refers to a sequence obtained after the terminal device sorts the measured LTE frequency points based on the measurement detection result, that is, a sequence represented by a sorting result obtained after the terminal device sorts the measured LTE frequency points.

In another possible implementation, that the terminal device performs searching on the frequency points in the DB 1 according to a preset sequence_1 may specifically include: The terminal device may select top y LTE frequency points in the DB 1, and perform searching on the y LTE frequency points according to the sequence.

In another possible implementation, that the terminal device performs searching on the frequency points in the DB 1 according to a preset sequence_1 may specifically include: The terminal device may select top y LTE frequency points in the DB 1, resort the y LTE frequency points, and perform searching on the y LTE frequency points according to a sequence obtained after resorting. In this case, the preset sequence_1 is a sequence obtained after the y LTE frequency points are resorted. It may be understood that for a resorting manner, reference may be made to the foregoing descriptions, and details are not described herein again.

S311: If an appropriate LTE cell is not found after searching is performed on the frequency points in the DB 1, the terminal device attempts to perform searching on an LTE frequency point set_2.

In some embodiments of this application, the LTE frequency point set_2 may include a target LTE frequency point, that is, the frequency point A. In this case, the terminal device may perform searching on the frequency point A again.

In some embodiments of this application, an access threshold that needs to be met by the terminal device for searching for an appropriate LTE cell when performing step S309 is higher than an access threshold that needs to be met by the terminal device for searching for an appropriate LTE cell when performing step S311. In some embodiments of this application, an access threshold that needs to be met by the terminal device for searching for an appropriate LTE cell when performing step S308 is higher than an access threshold that needs to be met by the terminal device for searching for an appropriate LTE cell when performing step S311. In some embodiments of this application, access thresholds that need to be met by the terminal device for searching for an appropriate LTE cell when performing step S308 and S309 are the same. It may be understood that the access threshold that an appropriate LTE cell needs to meet may be specifically set according to an actual requirement. This is not specifically limited in this application.

S312: If the terminal device still does not find an appropriate LTE cell when the timer T2 times out, the terminal device does not attempt to perform searching on the LTE frequency point set_2, and selects an NR cell for access.

S313: If an appropriate LTE cell is found, the terminal device initiates RRC access and TAU procedures, camps on the found appropriate LTE cell, and stores, into the DB 2, the frequency point corresponding to the NR cell camped on before fallback, the frequency point A, and a frequency point corresponding to the currently camped LTE cell.

It may be understood that, for specific implementations of step S310 to step S313, reference may be made to related descriptions of step S109 to step S112, and details are not described herein again.

It should be noted that In some embodiments of this application, the terminal device may start the timer T2 in response to receiving the instruction that is sent by the NR and that is to redirect to the frequency point A, and start the timer T1 when there is no LTE frequency point, in the DB 2, that matches the frequency point A and the currently camped NR cell, or there is an LTE frequency point, in the DB 2, that matches the fallback frequency point A and the frequency point corresponding to the currently camped NR cell but an LTE cell corresponding to the LTE frequency point is not an appropriate LTE cell.

It should be noted that, in some embodiments of this application, after performing step S303, the terminal device may store the measured LTE frequency points and related information of the measured LTE frequency points into the DB 1 without sorting the measured LTE frequency points. Specifically, after performing step S301 to step S303, the terminal device may store the measured LTE frequency points and related information of the LTE frequency points included in the measurement detection result into the DB 1, and then perform step S305 to step S309.

In some embodiments of this application, after performing step S309, if an appropriate LTE cell is still not found until the timer T1 times out, the terminal device may perform searching on the LTE frequency points in the DB 1 according to the preset sequence_1, and perform step S311 to step S313. That the terminal device may perform searching on the LTE frequency points in the DB 1 according to the preset sequence_1 may specifically include: The terminal device may sort the LTE frequency points in the DB 1, and perform searching on the LTE frequency points in the DB 1 according to a sequence obtained after sorting.

It may be understood that for a specific sorting method, reference may be made to the foregoing descriptions (for example, step S104), and details are not described in this application.

It should be noted that for a communication method when a signal of an NR cell is not good, refer to the foregoing embodiment. Details are not described herein in this application.

**The following describes apparatuses in embodiments of this application.**

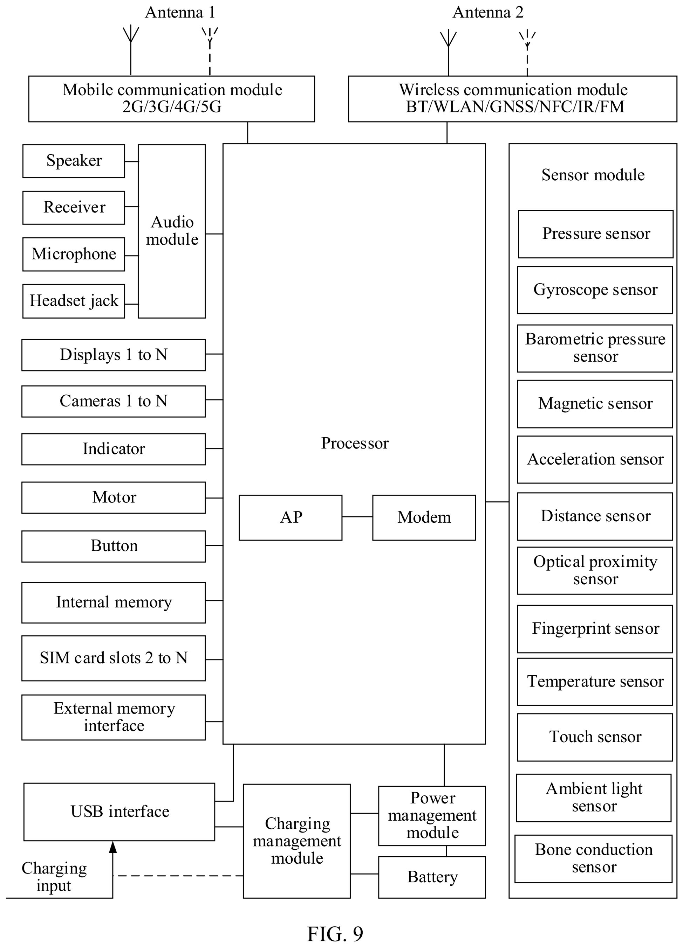

FIG. 9 is a schematic diagram of a hardware structure of a terminal device according to an embodiment of this application.

As shown in FIG. 9, the structure of the terminal device may include: a processor, an external memory interface, an internal memory, a universal serial bus (Universal Serial Bus, USB) interface, a charging management module, a power management module, a battery, an antenna 1, an antenna 2, a mobile communication module, a wireless communication module, a sensor module, a button, a motor, an indicator, a camera, a display, an SIM card slot, and the like. An audio module may include a speaker, a receiver, a microphone, a headset jack, and the like. The sensor module may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in this embodiment of this application does not constitute a specific limitation on the terminal device. In some other embodiments, the terminal device may include more or fewer components than those shown in the figure, some components may be combined, some components may be split, or different component arrangements may be used. The components shown in the figure may be implemented by using hardware, software, or a combination of software and hardware.

The processor may include one or more processing units. The processor may include an application processor (Application Processor, AP), a modem processor (Modem, or referred to as a baseband processor), a graphics processing unit (Graphics Processing Unit, GPU), an image signal processor (Image Signal Processor, ISP), a controller, a video codec, a digital signal processor (Digital Signal Processor, DSP), and/or a neural-network processing unit (Neural-network Processing Unit, NPU). Different processing units may be independent components, or may be integrated into one or more processors. The processor is a nerve center and a command center of the terminal device. The controller may generate an operation control signal based on an instruction operation code and a time sequence signal, to complete control of instruction fetching and instruction execution.

A wireless communication function of the terminal device may be implemented through the antenna 1, the antenna 2, the mobile communication module, the wireless communication module, the modem, and the like. In some embodiments, the antenna 1 of the terminal device is coupled to the mobile communication module, and the antenna 2 is coupled to the wireless communication module, so that the terminal device may communicate with a network and another device by using a wireless communication technology.

An operating system of the terminal device may use a layered architecture, an event-driven architecture, a microkernel architecture, a micro service architecture, or a cloud architecture. In embodiments of this application, an Android system with a layered architecture is used as an example to describe a software structure of the terminal device. It should be noted that although embodiments of this application are described by using the Android system as an example, a basic principle is also applicable to a terminal that is based on an operating system such as iOS or Windows.

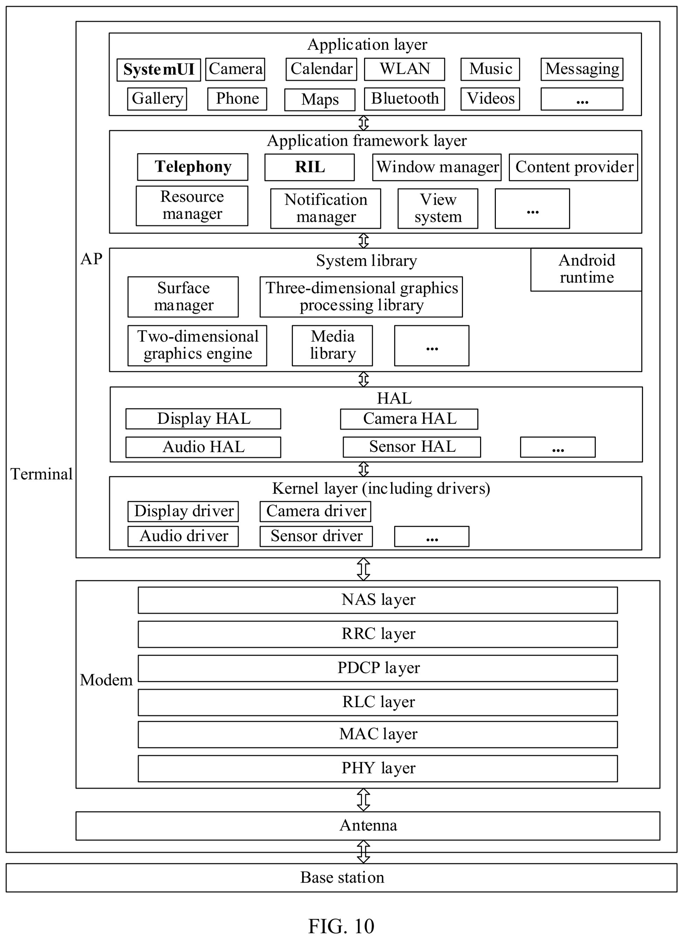

FIG. 10 is a schematic diagram of a software structure of a terminal device according to an embodiment of this application.

The software structure of the terminal device uses a layered architecture. In the layered architecture, software is divided into a plurality of layers, and each layer has a clear role and task. The layers communicate with each other through a software interface. That the Android system runs on an AP is used as an example. In some embodiments, the Android system is divided into five layers that are separately an application layer, an application framework layer (Framework), an Android runtime (Android runtime) and system library, a hardware abstraction layer (HAL), and a system kernel layer (Kernel) from top to bottom.

The application layer may include a series of application packages. The application packages may include APPs such as Camera, Gallery, Calendar, Call, Map, WLAN, Bluetooth, Music, Videos, and Messaging. The application layer may further include systemUI (systemUI). systemUI is used to display an interface of the terminal device, for example, display a signal icon corresponding to a SIM card, and display a call interface. The application framework layer provides an application programming interface (Application Programming Interface, API) and a programming framework for the applications in the application layer. The application framework layer includes some predefined functions. For example, the application framework layer may include a window manager, a content provider, a view system, a phone manager, a resource manager, a notification manager, and the like. The phone manager is configured to provide a call function of the terminal device, such as management of a call state (including answering and hanging up). The phone manager is represented by telephony in FIG. 10. The application framework layer may further include an RIL (Radio Interface Layer, radio interface layer), and a modem processor (Modem) may exchange information with the telephony via the RIL.

The modem may include a physical PHY (Physical) layer, a medium access control (Medium Access Control, MAC) layer, a radio link control (Radio Link Control, RLC) layer, a packet data convergence protocol (Packet Data Convergence Protocol, PDCP) layer, an RRC layer, and a non-access stratum (Non-Access Stratum, NAS). For specific meanings of the PHY layer, the MAC layer, the RLC layer, the PDCP layer, the RRC layer, and the NAS layer, refer to related technical documents. Details are not described herein. The layers may be software modules. The modem may interact with a base station through an antenna.

In some embodiments of this application, the RRC layer in the modem may receive an RRC release message sent by a network side, and send an LTE frequency point to a bottom layer (for example, the MAC layer), so that the bottom layer searches for an appropriate LTE cell. Methods provided in some embodiments of this application may be mainly controlled or performed via the RRC layer.

The foregoing embodiments are merely used to describe the the technical solutions of this application, but are not intended to limit this application. Although this application is described in detail with reference to the foregoing embodiments, a person of ordinary skill in the art should understand that modifications may still be made to the technical solutions described in the foregoing embodiments, or equivalent replacements may be made to some technical features thereof; without departing from the scope of the technical solutions of embodiments of this application.

## Claims

1. A communication method, applied to a terminal device, wherein the method comprises:
camping, by the terminal device, on a first cell, wherein the first cell is a new radio NR cell;
starting, by the terminal device, a first timer and a second timer in response to receiving a first message, wherein the first message carries an indication to redirect to a target long term evolution LTE frequency point; the target LTE frequency point is an LTE frequency point indicated by a network side for redirection; duration of the first timer is less than duration of the second timer; and interval duration between a start moment of the first timer and a start moment of the second timer is short;
searching, by the terminal device based on the target LTE frequency point, for an LTE cell meeting a first preset condition;
if the LTE cell meeting the first preset condition is still not found until the first timer times out, searching, by the terminal device based on a first LTE frequency point set, for an LTE cell meeting a second preset condition, wherein the first LTE frequency point set comprises at least one LTE frequency point different from the target LTE frequency point; and
if the LTE cell meeting the second preset condition is found when the second timer does not time out, camping, by the terminal device, on the found LTE cell meeting the second preset condition.

2. The method according to claim 1, wherein the first message is a radio resource control release RRC release message; and the method further comprises: if the LTE cell meeting the second preset condition is still not found until the second timer times out, selecting, by the terminal device, a second cell to camp on, wherein the second cell is an NR cell.

3. The method according to claim 1 or 2, wherein the first preset condition is the same as or different from the second preset condition.

4. The method according to claim 3, wherein that the first preset condition is different from the second preset condition specifically comprises: a preset access threshold corresponding to the second preset condition is less than a preset access threshold corresponding to the first preset condition, wherein the preset access threshold is a signal quality threshold at which access to an LTE cell is allowed.

5. The method according to any one of claims 1 to 4, wherein the duration of the first timer is less than duration of a third timer started on the network side; and the third timer is used by the network side to control duration of fallback.

6. The method according to any one of claims 1 to 5, wherein the duration of the second timer is not less than the duration of the third timer started on the network side, and is not greater than x times the duration of the third timer; the third timer is used by the network side to control the duration of fallback; and x is not less than 1, and is not greater than 2.

7. The method according to claim 5 or 6, wherein the duration of the third timer is 5 seconds.

8. The method according to any one of claims 1 to 7, wherein the first LTE frequency point set comprises first LTE frequency point information and a historical LTE frequency point; the first LTE frequency point information comprises an LTE frequency point corresponding to an LTE neighboring cell of the first cell; the historical LTE frequency point comprises an LTE frequency point corresponding to an LTE cell on which the terminal device has camped; and the searching, by the terminal device based on a first LTE frequency point set, for an LTE cell meeting a second preset condition specifically comprises:
determining, by the terminal device, whether LTE cells corresponding to the LTE frequency point in the first LTE frequency point information and the historical LTE frequency point meet the second preset condition.

9. The method according to claim 8, wherein the determining, by the terminal device, whether LTE cells corresponding to the LTE frequency point in the first LTE frequency point information and the historical LTE frequency point meet the second preset condition specifically comprises:
selecting, by the terminal device, a group of LTE frequency points from the LTE frequency point in the first LTE frequency point information and the historical LTE frequency point, and sequentially determining, in descending order of energy, whether LTE cells corresponding to the group of LTE frequency points meet the second preset condition; and
if all LTE cells corresponding to the group of LTE frequency points do not meet the second preset condition, performing, by the terminal device, the step of selecting a group of LTE frequency points from the LTE frequency point in the first LTE frequency point information and the historical LTE frequency point, and sequentially determining, in descending order of energy, whether LTE cells corresponding to the group of LTE frequency points meet the second preset condition again, until all frequency points in the LTE frequency point in the first LTE frequency point information and the historical LTE frequency point are selected, wherein
LTE frequency points selected by the terminal device from the LTE frequency point in the first LTE frequency point information and the historical LTE frequency point again are different from the LTE frequency points previously selected by the terminal device from the LTE frequency point in the first LTE frequency point information and the historical LTE frequency point.

10. The method according to claim 9, wherein the first LTE frequency point set further comprises second LTE frequency point information; and the searching, by the terminal device based on a first LTE frequency point set, for an LTE cell meeting a second preset condition specifically comprises:
if all LTE cells corresponding to the LTE frequency point in the first LTE frequency point information and the historical LTE frequency point do not meet the second preset condition, searching, by the terminal device based on the second LTE frequency point information, for the LTE cell meeting the second preset condition.

11. The method according to claim 10, wherein the second LTE frequency point information specifically comprises at least one of the following: an LTE frequency point in a full frequency band, and an LTE frequency point in a prefer frequency band.

12. The method according to any one of claims 9 to 11, wherein the selecting, by the terminal device, a group of LTE frequency points from the LTE frequency point in the first LTE frequency point information and the historical LTE frequency point specifically comprises:
sorting, by the terminal device, the LTE frequency point in the first LTE frequency point information and the historical LTE frequency point based on one or more of signal strengths and bandwidths of the LTE cells corresponding to the LTE frequency point in the first LTE frequency point information and the historical LTE frequency point, whether the LTE cells are anchor cells, and whether the LTE cells are high-speed rail cells, and selecting top s1 LTE frequency points as the group of LTE frequency points, wherein s1 is a positive integer.

13. The method according to any one of claims 1 to 7, wherein the first LTE frequency point set comprises first LTE frequency point information; the first LTE frequency point information comprises an LTE frequency point corresponding to an LTE neighboring cell of the first cell; the searching, by the terminal device based on a first LTE frequency point set, for an LTE cell meeting a second preset condition specifically comprises:
determining, by the terminal device, whether an LTE cell corresponding to the LTE frequency point in the first LTE frequency point information meets the second preset condition.

14. The method according to claim 13, wherein the first LTE frequency point set further comprises third LTE frequency point information; and the searching, by the terminal device based on a first LTE frequency point set, for an LTE cell meeting a second preset condition specifically further comprises:
if all LTE cells corresponding to the LTE frequency point in the first LTE frequency point information do not meet the second preset condition, searching, by the terminal device based on the third LTE frequency point information, for the LTE cell meeting the second preset condition.

15. The method according to claim 14, wherein the third LTE frequency point information specifically comprises at least one of the following: a historical LTE frequency point, an LTE frequency point in a full frequency band, and an LTE frequency point in a prefer frequency band.

16. The method according to any one of claims 1 to 7, wherein the first LTE frequency point set comprises first LTE frequency point information and historical fallback information; the first LTE frequency point information comprises an LTE frequency point corresponding to an LTE neighboring cell of the first cell; the historical fallback information comprises at least one historical fallback record; each historical fallback record comprises the following information in a historical fallback process in which the terminal device successfully falls back from NR to LTE: an LTE frequency point indicated by the network side for redirection, a frequency point corresponding to an NR cell camped on by the terminal device before fallback, and a frequency point corresponding to an LTE cell camped on by the terminal device after fallback; and the searching, by the terminal device based on a first LTE frequency point set, for an LTE cell meeting a second preset condition specifically comprises:
determining, by the terminal device, whether an LTE cell corresponding to the LTE frequency point in the first LTE frequency point information meets the second preset condition, and determining whether the historical fallback information comprises a first historical fallback record, wherein a frequency point that corresponds to an NR cell camped on by the terminal device before fallback and that is comprised in the first historical fallback record is a frequency point corresponding to the first cell; and an LTE frequency point that is indicated by the network side for redirection and that is comprised in the first historical fallback record is the target LTE frequency point; and
if the historical fallback information comprises the first historical fallback record, searching, by the terminal device based on a frequency point that corresponds to an LTE cell camped on by the terminal device after fallback and that is comprised in the first historical fallback record, for the LTE cell meeting the second preset condition.

17. The method according to claim 16, wherein the method further comprises:
if the LTE cell corresponding to the LTE frequency point in the first LTE frequency point information meets the second preset condition, and/or the LTE cell meeting the second preset condition is found by the terminal device based on the frequency point that corresponds to the LTE cell camped on by the terminal device after fallback and that is comprised in the first historical fallback record, camping, by the terminal device, on the LTE cell meeting the second preset condition.

18. The method according to claim 16 or 17, wherein the method further comprises:
if the LTE cell corresponding to the LTE frequency point in the first LTE frequency point information does not meet the second preset condition, and the LTE cell meeting the second preset condition is not found by the terminal device based on the frequency point that corresponds to the LTE cell camped on by the terminal device after fallback and that is comprised in the first historical fallback record, searching, by the terminal device based on fourth LTE frequency point information, for the LTE cell meeting the second preset condition.

19. The method according to claim 18, wherein the fourth LTE frequency point information specifically comprises at least one of the following: a historical LTE frequency point, an LTE frequency point in a full frequency band, and an LTE frequency point in a prefer frequency band.

20. The method according to any one of claims 13 to 19, wherein the first LTE frequency point information comprises a plurality of LTE frequency points, and the plurality of LTE frequency points comprise LTE frequency points separately corresponding to a plurality of LTE neighboring cells of the first cell; and the determining, by the terminal device, whether an LTE cell corresponding to the LTE frequency point in the first LTE frequency point information meets the second preset condition specifically comprises: sequentially determining, by the terminal device in descending order of signal strengths, whether the LTE cells corresponding to the plurality of LTE frequency points meet the second preset condition.

21. The method according to any one of claims 13 to 19, wherein after the camping, by the terminal device, on a first cell, the method further comprises:
receiving, by the terminal device, fifth LTE frequency point information sent by a network device corresponding to the first cell, wherein the fifth LTE frequency point information comprises LTE frequency points corresponding to LTE neighboring cells of the first cell;
measuring, by the terminal device, signal strengths of the LTE cells corresponding to the LTE frequency points comprised in the fifth LTE frequency point information, and/or detecting bandwidths of the LTE cells corresponding to the LTE frequency points comprised in the fifth LTE frequency point information, and/or detecting, by the terminal device, whether the LTE cells corresponding to the LTE frequency points comprised in the fifth LTE frequency point information are anchor cells, to obtain a first result; and
sorting, by the terminal device, the LTE frequency points in the fifth LTE frequency point information based on the first result, to obtain the first LTE frequency point information; and
the determining, by the terminal device, whether an LTE cell corresponding to the LTE frequency point in the first LTE frequency point information meets the second preset condition specifically comprises: sequentially determining, by the terminal device based on a sorting result, whether the LTE cells corresponding to the LTE frequency points in the first LTE frequency point information meet the second preset condition.

22. The method according to any one of claims 1 to 21, wherein the LTE cell meeting the first preset condition specifically comprises: an LTE cell whose signal strength is greater than a first preset access threshold and to which access of the terminal device is not forbidden by the network side; and
the LTE cell meeting the second preset condition specifically comprises: an LTE cell whose signal strength is greater than a second preset access threshold and to which access of the terminal device is not forbidden by the network side.

23. A communication method, applied to a terminal device, wherein the method comprises:
camping, by the terminal device, on a first cell, wherein the first cell is an NR cell;
determining, by the terminal device in response to receiving a first message, whether historical fallback information comprises a first historical fallback record, wherein the first message carries an indication to redirect to a target LTE frequency point; the target LTE frequency point is an LTE frequency point indicated by a network side for redirection; the historical fallback information comprises at least one historical fallback record; each historical fallback record comprises the following information in a historical fallback process in which the terminal device successfully falls back from NR to LTE: an LTE frequency point indicated by the network side for redirection, a frequency point corresponding to an NR cell camped on by the terminal device before fallback, and a frequency point corresponding to an LTE cell camped on by the terminal device after fallback; and an NR cell that is camped on before fallback and that is comprised in the first historical fallback record is the first cell, and an LTE frequency point that is indicated by the network side for redirection and that is comprised in the first historical fallback record is the target LTE frequency point; and
if the historical fallback information comprises the first historical fallback record, searching, by the terminal device based on a frequency point that corresponds to an LTE cell camped on by the terminal device after fallback and that is comprised in the first historical fallback record, for an LTE cell meeting a first preset condition.

24. The method according to claim 23, wherein the method further comprises:
if the historical fallback information does not comprise the first historical fallback record, or the LTE cell meeting the first preset condition is not found by the terminal device based on the frequency point that corresponds to the LTE cell camped on by the terminal device after fallback and that is comprised in the first historical fallback record, starting, by the terminal device, a first timer, and searching, based on the target LTE frequency point, for the LTE cell meeting the first preset condition; and
if the LTE cell meeting the first preset condition is still not found by the terminal device based on the target LTE frequency point until the first timer times out, searching, by the terminal device based on a second LTE frequency point set, for an LTE cell meeting a second preset condition.

25. The method according to claim 23 or 24, wherein the first preset condition is the same as or different from the second preset condition; and that the first preset condition is different from the second preset condition specifically comprises: a preset access threshold corresponding to the second preset condition is less than a preset access threshold corresponding to the first preset condition, wherein the preset access threshold is a signal quality threshold at which access to an LTE cell is allowed.

26. The method according to any one of claims 23 to 25, wherein duration of the first timer is less than duration of a third timer started on the network side; and the third timer is used by the network side to control duration of fallback.

27. The method according to any one of claims 23 to 26, wherein duration of a second timer is not less than the duration of the third timer started on the network side, and is not greater than x times the duration of the third timer; the third timer is used by the network side to control the duration of fallback; and x is not less than 1, and is not greater than 2.

28. The method according to claim 26 or 27, wherein the duration of the third timer is 5 seconds.

29. The method according to claim 24, wherein the second LTE frequency point set comprises first LTE frequency point information and third LTE frequency point information; the first LTE frequency point information comprises an LTE frequency point corresponding to an LTE neighboring cell of the first cell; the searching, by the terminal device based on a second LTE frequency point set, for an LTE cell meeting a second preset condition specifically comprises:
determining, by the terminal device, whether an LTE cell corresponding to the LTE frequency point in the first LTE frequency point information meets the second preset condition; and
if all LTE cells corresponding to the LTE frequency point in the first LTE frequency point information do not meet the second preset condition, searching, by the terminal device based on the third LTE frequency point information, for the LTE cell meeting the second preset condition.

30. The method according to claim 29, wherein the third LTE frequency point information specifically comprises: at least one of a historical LTE frequency point, an LTE frequency point in a full frequency band, and an LTE frequency point in a prefer frequency band.

31. The method according to any one of claims 23 to 30, wherein the method further comprises:
starting, by the terminal device, the second timer in response to the first message;
if the LTE cell meeting the first preset condition is found when the first timer does not time out, camping, by the terminal device, on the found LTE cell meeting the first preset condition;
if the LTE cell meeting the second preset condition is found when the first timer times out and the second timer does not time out, camping, by the terminal device, on the found LTE cell meeting the second preset condition; and
if the LTE cell meeting the first preset condition or the LTE cell meeting the second preset condition is still not found until the second timer times out, selecting, by the terminal device, a second cell to camp on, wherein the second cell is an NR cell.

32. The method according to any one of claims 23 to 30, wherein the method further comprises:
if the historical fallback information does not comprise the first historical fallback record, or the LTE cell meeting the second preset condition is not found by the terminal device based on the frequency point that corresponds to the LTE cell camped on by the terminal device after fallback and that is comprised in the first historical fallback record, starting, by the terminal device, the second timer, wherein interval duration between a start moment of the first timer and a start moment of the second timer is short;
if the LTE cell meeting the first preset condition is found when the first timer does not time out, camping, by the terminal device, on the found LTE cell meeting the first preset condition;
if the LTE cell meeting the second preset condition is found when the first timer times out and the second timer does not time out, camping, by the terminal device, on the found LTE cell meeting the second preset condition; and
if the LTE cell meeting the first preset condition or the LTE cell meeting the second preset condition is still not found until the second timer times out, selecting, by the terminal device, a second cell to camp on, wherein the second cell is an NR cell.

33. A terminal device, comprising a processor and a memory, wherein the processor invokes and executes a computer program stored in the memory, to enable the terminal device to implement the method according to any one of claims 1 to 22 or claims 23 to 32.

34. A chip system, used in a terminal device, wherein the chip system comprises at least one processor and an interface, and the interface is configured to receive instructions and transmit the instructions to the at least one processor; and the at least one processor executes the instructions, to enable the terminal device to perform the method according to any one of claims 1 to 22 or claims 23 to 32.
